# EUROPEAN PATENT APPLICATION

(11) **EP 4 277 343 A1**
(43) Date of publication of application: **15.11.2023**
(21) Application number: 21917541.1
(22) Date of filing: 28.09.2021
(51) Int. Cl.: H04W 28/04, H04W 28/16, H04W 84/12, H04W 88/08

(54) **BASE STATION, COMMUNICATION DEVICE, AND COMMUNICATION METHOD**

(30) Priority: 08.01.2021 JP 2021002273
(71) Applicant: Panasonic Intellectual Property Corporation of America, Torrance, CA 90504 (US)
(72) Inventor: NAKANO, Takayuki, Kadoma-shi, Osaka 571-0057 (JP); IWAI, Takashi, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2021/035543
(87) International publication number: WO 2022/149316

(57) **Abstract**

A base station according to the present invention is equipped with: a receiver circuit that receives control information pertaining to sharing a response signal to a downlink signal during coordinated communication between base stations; and a control circuit that, on the basis of the control information, controls the transmission of the response signal to another base station.

## Description

### Technical Field

The present disclosure relates to a base station, a communication apparatus, and a communication method.

### Background Art

In the Institute of Electrical and Electronics Engineers (IEEE), studies have been carried out on the IEEE 802.11be standard (hereinafter, also referred to as " 11be") for the next generation radio Local Area Network (LAN), which is the successor to the IEEE 802.11ax standard (hereinafter, also referred to as "11ax"). For example, IEEE 802.11ax is also referred to as High Efficiency (HE), and IEEE 802.11be is also referred to as Extremely High Throughput (EHT).

### Citation List

### Patent Literature

NPL 1
   IEEE 802.11-20/0566r99, Compendium of straw polls and potential changes to the Specification Framework Document
NPL 2
   IEEE 802.11-19/1533r0, Consideration on Multi-AP Ack Protocol
NPL 3
   IEEE 802.11-20/0590r5, Coordinated Spatial Reuse: Focus on Downlink
NPL 4
   IEEE P802.11ax^{™}/D8.0
NPL 5
   IEEE P802.11-REVmdTM/D5.0

### Summary of Invention

However, retransmission control of coordinated communication in radio communication such as wireless LAN has not been sufficiently discussed.

One non-limiting and exemplary embodiment of the present disclosure facilitates providing a base station, a communication apparatus, and a communication method each capable of enhancing the efficiency of retransmission control in coordinated communication.

A base station according to an embodiment of the present disclosure includes: reception circuitry, which, in operation, receives control information on sharing of a response signal for a downlink signal in inter-base-station coordinated communication; and control circuitry, which, in operation, controls transmission of the response signal to another base station based on the control information.

It should be noted that a general or specific embodiment may be implemented as a system, an apparatus, a method, an integrated circuit, a computer program, a storage medium, or any selective combination thereof.

According to an embodiment of the present disclosure, it is possible to enhance the efficiency of retransmission control in coordinated communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary configuration of a multi-access point (Multi-AP, MAP);
FIG. 2 illustrates an exemplary communication environment in which downlink and uplink coverages are different from each other;
FIG. 3 illustrates an exemplary control sequence of MAP;
FIG. 4 illustrates another exemplary control sequence of MAP;
FIG. 5 is a block diagram illustrating an exemplary configuration of a part of an AP according to Embodiment 1;
FIG. 6 is a block diagram illustrating an exemplary configuration of the AP according to Embodiment 1;
FIG. 7 is a block diagram illustrating an exemplary configuration of a STA according to Embodiment 1;
FIG. 8 illustrates an exemplary control sequence of MAP according to Embodiment 1;
FIG. 9 illustrates an exemplary Block ACK (BA) request frame;
FIG. 10 illustrates an exemplary definition of the BA request in a Frame Control field;
FIG. 11 illustrates an exemplary definition of the BA request in a Trigger Type subfield;
FIG. 12 illustrates an exemplary definition of the BA request in a BlockAckReq frame variant;
FIG. 13 illustrates an exemplary BA sharing request frame;
FIG. 14 illustrates an exemplary definition of the BA sharing request in a Frame Control field;
FIG. 15 illustrates an exemplary definition of the BA sharing request in a Trigger Type subfield;
FIG. 16 illustrates an exemplary definition of the BA sharing request in a BlockAckReq frame variant;
FIG. 17 illustrates an exemplary BA sharing frame;
FIG. 18 illustrates an exemplary definition of the BA sharing in a Frame Control field;
FIG. 19 illustrates an exemplary definition of the BA sharing in a BlockAck frame variant;
FIG. 20 illustrates an exemplary control sequence of MAP according to Embodiment 2;
FIG. 21 illustrates an exemplary BA sharing request frame;
FIG. 22 illustrates an exemplary definition of the BA sharing request in a Frame Control field;
FIG. 23 illustrates an exemplary definition of the BA sharing request in a Trigger Type subfield;
FIG. 24 illustrates an exemplary definition of the BA sharing request in a BlockAckReq frame variant;
FIG. 25 illustrates an exemplary BA sharing frame;
FIG. 26 illustrates an exemplary definition of the BA sharing in a Frame Control field;
FIG. 27 illustrates an exemplary definition of the BA sharing in a BlockAck frame variant;
FIG. 28 illustrates an exemplary control sequence of MAP according to Embodiment 3;
FIG. 29 illustrates an exemplary configuration of a MAP trigger frame;
FIG. 30 illustrates another exemplary configuration of the MAP trigger frame;
FIG. 31 illustrates an exemplary BA sharing frame;
FIG. 32 illustrates an exemplary definition of the BA sharing in a Frame Control field;
FIG. 33 illustrates an exemplary definition of the BA sharing in a BlockAck frame variant;
FIG. 34 illustrates an exemplary control sequence of MAP according to Embodiment 4;
FIG. 35 illustrates an exemplary configuration of a MAP trigger frame;
FIG. 36 illustrates an exemplary line configuration between Shared APs; and
FIG. 37 illustrates an exemplary control sequence of MAP according to Embodiment 5.

### Description of Embodiments

Hereinafter, embodiments of the present disclosure will be described in detail with reference to the accompanying drawings.

### [Multi-Access Point coordination]

In 11be, for example, application of Multi-AP (hereinafter, referred to as "MAP") coordination (hereinafter, also referred to as "coordinated communication" or "inter-base-station coordinated communication") in which a plurality of access points (each also referred to as "AP: Access Point" or "base station") cooperatively transmit and receive data to and from each terminal (also referred to as "STA: Station" or "non-AP STA") has been studied (e.g., see Non-Patent Literature (hereinafter, referred to as NPL) 1 to NPL 3).

MAP coordination schemes (also referred to as "communication type" or "MAP type") in 11be include Joint Transmissions (hereinafter, referred to as "JT"). The JT includes, for example, a method for transmitting the same signal from a plurality of coordinating APs and a method for transmitting different transmission streams from a plurality of coordinating APs. The method for transmitting different transmission streams from a plurality of coordinating APs is referred to as, for example, Distributed Multi User - Multiple Input Multiple Output (D-MIMO).

In IEEE 802.11, an Acknowledgement (ACK) frame as a confirmation response signal for Quality of Service (QoS) data and a Block ACK (BlockAck) frame that collectively transmits responses for a plurality of frames are defined (see, e.g., NPLs 4 and 5).

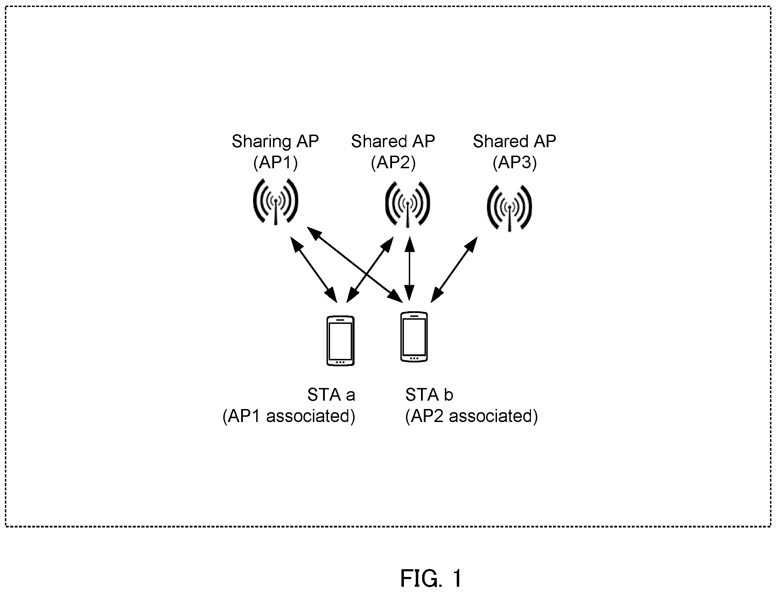

FIG. 1 illustrates an exemplary configuration of APs and STAs (exemplary configuration of MAP) that perform coordinated communication.

In FIG. 1, "Sharing AP" may be an AP that obtains a channel use (or transmission) period (e.g., TXOP: transmission opportunity) and starts (or controls) coordinated communication. Further, "Shared AP" may be an AP that is indicated to perform coordinated communication by Sharing AP.

Note that, in the example illustrated in FIG. 1, any one of Shared APs (e.g., AP 1) also serves as Sharing AP, but the present disclosure is not limited thereto, and Sharing AP and Shared AP are configured to be different APs from each other.

Further, in the example of FIG. 1, STA a is associated (may be referred to as "connected") with Sharing AP (AP 1), and performs coordinated communication between Sharing AP (AP 1) and Shared AP (AP 2). Also, in the example of FIG. 1, STA b is associated with Shared AP (AP 2), and performs coordinated communication between Sharing AP (AP 1), Shared AP (AP 2), and Shared AP (AP 3).

For example, STA receives downlink data for the STA from AP, and transmits an ACK or Block ACK to AP with which the STA is associated. Further, for example, when the MAP coordination scheme is JT, it is expected that an ACK or Block ACK is exchanged between Shared APs (see, e.g., NPL 2).

### [Retransmission Control in MAP Coordination]

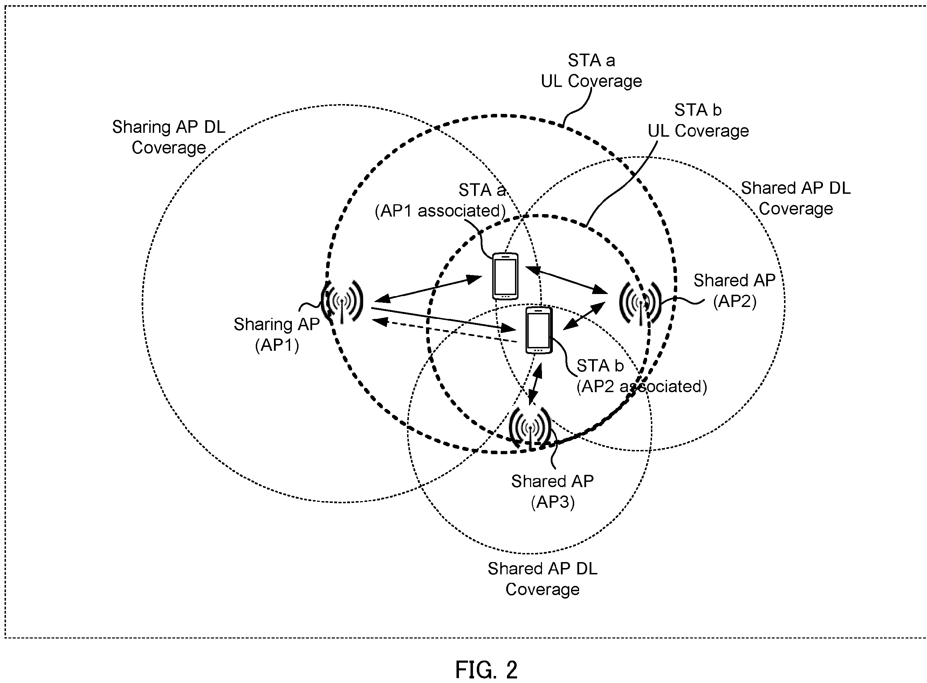

FIG. 2 illustrates an exemplary communication environment in which downlink and uplink coverage areas (communicable ranges, hereinafter, each may be referred to as a "coverage") are different from each other. Note that the connection relationship between AP 1, AP 2, AP 3, STA a, and STAb illustrated in FIG. 2 may be the same as the connection relationship between APs and STAs illustrated in FIG. 1.

As illustrated in FIG. 2, STA a is in (or is located in, the same will apply hereinafter) the downlink coverage of each Sharing AP (AP 1) and Shared AP (AP 2). Further, in the uplink coverages of STA a, Sharing AP (AP 1) and Shared AP (AP 2) are present. Thus, Sharing AP (AP 1) and Shared AP (AP 2) receive (e.g., simultaneously receive) a response (e.g., an ACK or Block ACK for downlink data) from STA a, for example.

Further, as illustrated in FIG. 2, STAb is in the respective downlink coverages of Sharing AP (AP 1), Shared AP (AP 2), and Shared AP (AP 3). Meanwhile, in the uplink coverage of STAb, Shared AP (AP 2) and Shared AP (AP 3) are present, but Sharing AP (AP 1) is outside of the uplink coverage of STAb. Thus, Sharing AP (AP 1), Shared AP (AP 2), and Shared AP (AP 3) possibly receive (e.g., simultaneously receive) no response (e.g., ACK or Block ACK for downlink data) from STAb, for example. For example, Sharing AP (AP 1) possibly receives no ACK or Block ACK from STAb.

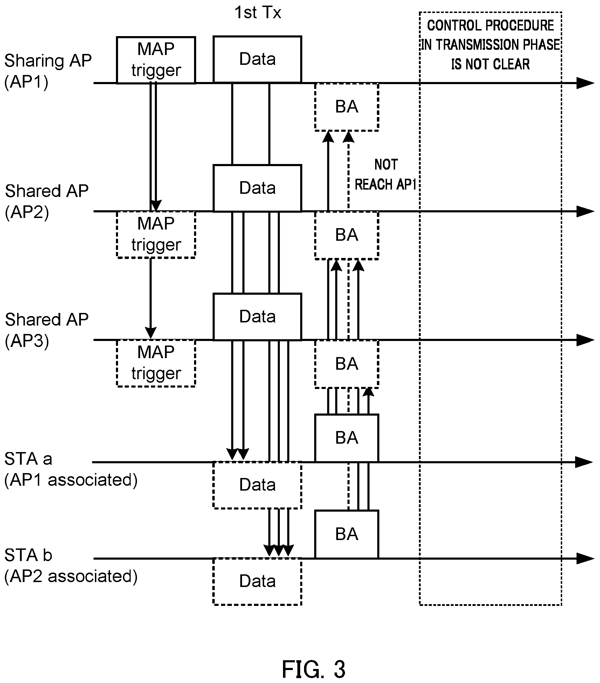

FIG. 3 illustrates an exemplary control sequence of MAP in the communication environment illustrated in FIG. 2.

In FIG. 3, for example, Sharing AP (AP 1) transmits, to Shared APs (AP 2 and AP 3), a MAP trigger frame (also referred to as a MAP Announcement frame), which is a trigger for starting data transmission related to MAP. After transmitting and receiving the MAP trigger frame, Sharing AP (AP 1) and Shared APs (AP 2 and AP 3) may simultaneously transmit data (e.g., initial transmission data).

STA a and STAb receive data from each AP, and transmit (or feed back), to each AP, an ACK or Block ACK (represented as "BA" in the example of FIG. 3) indicating whether the data is successfully received (decoded).

At this time, regarding STA b, because Sharing AP (AP 1) is outside of the uplink coverage of STA b as illustrated in FIG. 2, an ACK or Block ACK transmitted from STA b does not reach Sharing AP (AP 1) in the example illustrated in FIG. 3. Sharing AP (AP 1) receives no ACK or Block ACK from STAb, and thus Sharing AP (AP 1) may, for example, determine to retransmit data. As described above, redundant retransmission possibly occurs even though STAb successfully receives data.

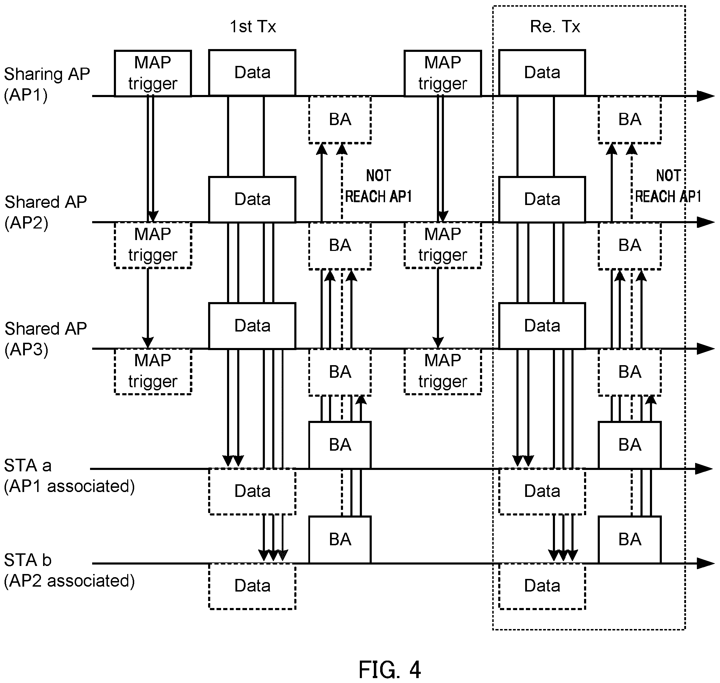

Next, FIG. 4 illustrates an exemplary control sequence in a retransmission phase following the operation illustrated in FIG. 3.

In FIG. 4, for example, Sharing AP (AP 1) transmits a MAP trigger frame to Shared APs (AP 2 and AP 3) also at the time of retransmission. After transmitting and receiving the MAP trigger frame, Sharing AP (AP 1) and Shared APs (AP 2 and AP 3) may simultaneously transmit data (e.g., retransmission data).

At this time, in FIG. 4, similarly to the example illustrated in FIG. 3, when an ACK or Block ACK transmitted from STAb does not reach Shared AP (AP 1), Shared AP (AP 1) determines to retransmit the data. As described above, when Shared AP (AP 1) determines retransmission even though STA b successfully receives data, Shared AP (AP 2 and AP 3) that receives the ACK or Block ACK from STA b also retransmit data, and redundant transmission possibly occurs.

As described above, in the MAP coordination, redundant retransmission possibly occurs when there is Shared AP that does not receive an ACK or Block ACK from each STA. Further, for example, a method for sharing information on an ACK or Block ACK of each STA between Shared APs (or between Sharing AP and Shared AP) has not been sufficiently discussed.

Therefore, in an embodiment of the present disclosure, a method for enhancing the efficiency of retransmission control during a MAP operation will be described. For example, after AP receives an ACK or Block ACK from each STA, Sharing AP and Shared AP share the ACK or Block ACK by providing a "sharing phase (or BA sharing phase)" for sharing the ACK or Block ACK.

Note that the term "phase" may be replaced with another term such as "period", "sequence", or "procedure", for example.

### [Configuration of Radio Communication System]

The radio communication system according to the present embodiment may include a plurality of APs 100 and STAs 200. AP 100 may include, for example, functions of both Sharing AP and Shared AP, or may include either of the functions.

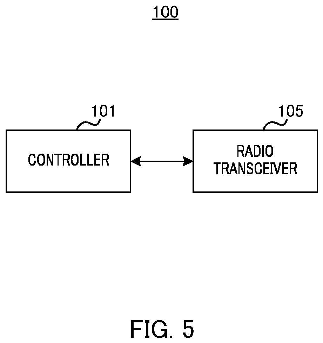

FIG. 5 is a block diagram illustrating an exemplary configuration of a part of AP 100 according to Embodiment 1 of the present disclosure. In AP 100 illustrated in FIG. 4, radio transceiver 105 (corresponding to, e.g., reception circuitry) receives control information on sharing of a response signal (e.g., an ACK or Block ACK) for a downlink signal in inter-base-station coordinated communication (e.g., MAP coordination). Controller 101 (corresponding to, e.g., control circuitry) controls transmission of the response signal to another base station based on the control information.

### (Embodiment 1)

### [Exemplary Configuration of AP 100]

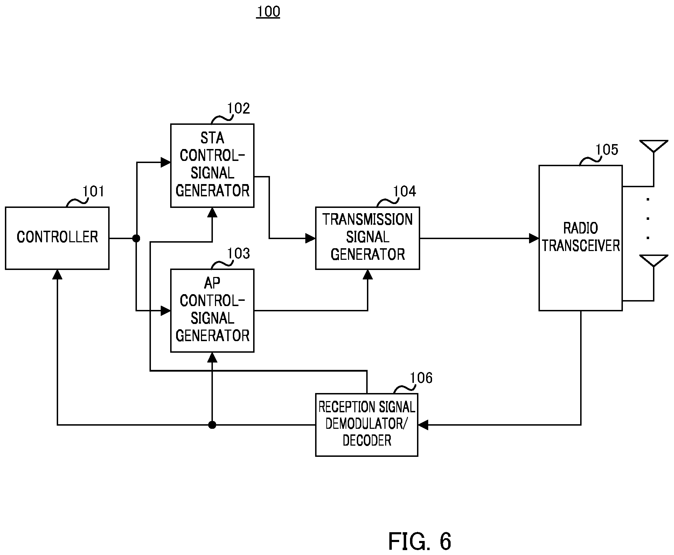

FIG. 6 is a block diagram illustrating an exemplary configuration of AP 100. AP 100 illustrated in FIG. 6 may include, for example, controller 101, control signal generator for STA (hereinafter, referred to as STA control-signal generator) 102, control signal generator for AP (hereinafter, referred to as AP control-signal generator) 103, transmission signal generator 104, radio transceiver 105, and reception signal demodulator/decoder 106.

Controller 101 may, for example, control a configuration of a MAP Trigger frame. For example, when AP 100 is Sharing AP, controller 101 may control generation of a control signal (e.g., MAP Trigger frame) for another AP 100 (e.g., Shared AP). Further, controller 101 may control sharing of an ACK or Block ACK, for example. For example, controller 101 may determine whether to share an ACK or Block ACK from each STA200 with another AP 100 based on the control information for controlling sharing of the ACK or Block ACK input from reception signal demodulator/decoder 106.

Note that an exemplary control method regarding sharing of an ACK or Block ACK in AP 100 will be described later.

Further, controller 101 may configure control information for STA 200 or another AP 100, for example. For example, controller 101 may configure information on resource allocation for each STA 200 and scheduling information such as MCS. Furthermore, controller 101 may, for example, determine a parameter on transmission control (e.g., a parameter on coordinated communication described above) based on the information input from reception signal demodulator/decoder 106 (e.g., control information indicated from Sharing AP to Shared AP). Controller 101 may, for example, output the control information including the determined transmission control parameter to STA control-signal generator 102 and AP control-signal generator 103.

STA control-signal generator 102 may generate, for example, a control signal for STA 200 (e.g., Trigger frame), and output the generated control signal to transmission signal generator 104.

AP control-signal generator 103 may, for example, generate a control signal for AP 100. The control signal for AP 100 may include, for example, a MAP Trigger frame or a control frame related to sharing of an ACK or Block ACK. For example, AP control-signal generator 103 may generate a control signal based on the control information input from controller 101 and the information input from reception signal demodulator/decoder 106. AP control-signal generator 103 outputs the generated control signal to transmission signal generator 104, for example.

Transmission signal generator 104 may, for example, perform transmission processing on the control signal input from STA control-signal generator 102 or AP control-signal generator 103 or on data and an ACK/Block ACK, and may generate a radio frame (transmission signal). Transmission signal generator 104 outputs the generated transmission signal to radio transceiver 105.

Radio transceiver 105, for example, performs radio transmission processing, such as D/A conversion or up-conversion to a carrier frequency, on the transmission signal input from transmission signal generator 104, and transmits the signal after the radio transmission processing via an antenna.

When AP 100 receives an uplink signal transmitted from STA 200 or a control signal transmitted from another AP 100, AP 100 may, for example, operate as described below.

The radio signal received via an antenna is input to radio transceiver 105. Radio transceiver 105, for example, performs radio reception processing such as down-conversion of a carrier frequency on the received radio signal, and outputs the signal after the radio reception processing to reception signal demodulator/decoder 106.

Reception signal demodulator/decoder 106 may, for example, perform processing such as autocorrelation processing on the signal input from radio transceiver 105, and may extract the received radio frame. Further, reception signal demodulator/decoder 106 may, for example, decode and demodulate an uplink signal (e.g., a response signal or feedback information) from STA 200 or a control signal (e.g., a MAP Trigger frame or a control frame related to sharing of an ACK or Block ACK) from another AP 100 included in the extracted radio frame. Reception signal demodulator/decoder 106 may, for example, output the control signal after the demodulation to controller 101, STA control-signal generator 102, and AP control-signal generator 103.

### [Exemplary Configuration of STA 200]

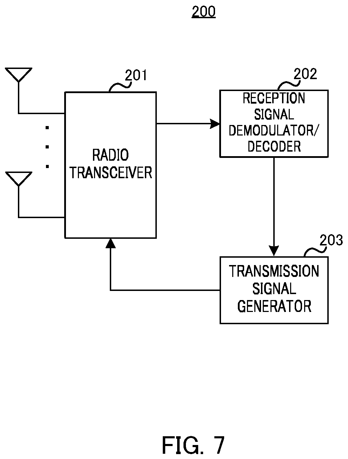

FIG. 7 is a block diagram illustrating an exemplary configuration of STA 200 according to the present embodiment. STA 200 illustrated in FIG. 7 may include, for example, radio transceiver 201, reception signal demodulator/decoder 202, and transmission signal generator 203.

Radio transceiver 201, for example, receives a signal transmitted from AP 100 via an antenna, performs radio reception processing such as down-conversion or A/D conversion on the received signal, and outputs the signal after the radio reception processing to reception signal demodulator/decoder 202. Further, radio transceiver 201 may, for example, perform radio transmission processing such as D/A conversion and up-conversion to a carrier frequency on the signal input from transmission signal generator 203, and transmit the signal after the radio transmission processing via an antenna.

For example, reception signal demodulator/decoder 202 may perform processing such as autocorrelation processing on the signal input from radio transceiver 201, and extract the received radio frame. Reception signal demodulator/decoder 202 may, for example, demodulate and decode a control signal (e.g., Trigger frame) included in the extracted radio frame, and obtain an uplink transmission control parameter. Reception signal demodulator/decoder 202 may, for example, output the obtained uplink transmission control parameter to transmission signal generator 203.

Transmission signal generator 203 may perform transmission signal processing on an uplink signal (e.g., ACK or Block ACK for a downlink signal) based on the uplink transmission control parameter input from reception signal demodulator/decoder 202, and generate a radio frame (transmission signal). Transmission signal generator 203, for example, outputs the generated transmission signal to radio transceiver 201.

### [Exemplary Operation of AP 100 and STA 200]

Next, an exemplary operation of AP 100 and STA 200 according to the present embodiment will be described.

In the present embodiment, for example, an AP that controls sharing of an ACK or Block ACK is defined as "BA control AP". The BA control AP may collect information on an ACK or Block ACK and may control sharing of the ACK or Block ACK in Sharing AP and Shared AP.

Sharing AP may be configured as BA control AP, or Shared AP capable of receiving an ACK or Block ACK transmitted from STA 200 under MAP may be configured (or defined) as BA control AP. Further, for example, BA control AP may be configured (defined or changed) periodically or non-periodically. Accordingly, BA control AP is configured depending on the propagation environment, and thus adaptive optimization of retransmission control is possible.

For example, the following control steps (A), (B), and (C) may be provided in a BA sharing phase after the process in which each STA 200 transmits an ACK or Block ACK. Note that the term "step" may be replaced with another terms such as "processing" or "procedure".
(A) When Shared AP does not receive an ACK or Block ACK, Shared AP transmits a frame for requesting the ACK or Block ACK (or requesting BA sharing) (hereinafter, referred to as a "BA request frame") to BA control AP.
(B) When the BA control AP receives the BA request frame, the BA control AP transmits a frame indicating BA sharing (e.g., referred to as a "BA sharing request frame") to each Shared AP.
(C) When Shared AP receives the BA sharing request frame, Shared AP transmits a frame including an ACK or Block ACK held (e.g., received) by Shared AP (e.g., referred to as a "BA sharing frame").

Note that TXOP (transmission opportunity) may be configured, for example, in a MAP trigger frame, which is a trigger for starting MAP data transmission, and in the TXOP, a BA sharing phase including above-described control steps (A) to (C) may be included.

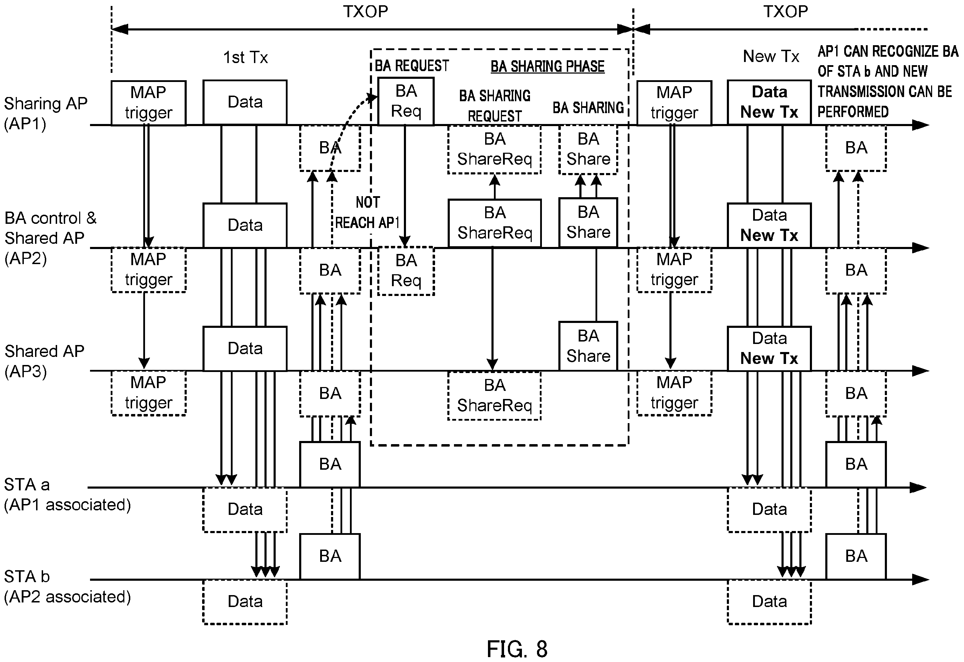

FIG. 8 illustrates an exemplary control sequence of MAP according to the present embodiment.

Note that, similarly to FIG. 3, FIG. 8 illustrates an exemplary control sequence of MAP in the communication environment illustrated in FIG. 2. For example, FIG. 8 illustrates an example in which, regarding ACKs or Block ACKs for data (e.g., initial transmission data) transmitted from Sharing AP (AP 1) and Shared APs (AP 2 and AP 3), the ACK or Block ACK from STAb to Sharing AP (AP 1) does not reach Sharing AP (AP 1).

In FIG. 8, Shared AP (AP 2), which is an AP capable of receiving ACKs or Block ACKs from both STA a and STA b, may be configured (or defined) as BA control AP, for example. Note that the BA control AP may be specified in a MAP trigger frame, which is a trigger for starting MAP data transmission, or may be configured in a phase that comes before the MAP trigger frame and in which setup or a channel estimation related to MAP is performed.

For example, in above-described control step (A), Sharing AP (AP 1) that does not receive an ACK or Block ACK may transmit a BA request frame to Shared AP (AP 2) serving as BA control AP.

Further, for example, in above-described control step (B), when Shared AP (AP 2) serving as BA control AP receives the BA request frame from Sharing AP (AP 1) that does not receives the ACK or Block ACK, Shared AP (AP 2) may transmit a BA sharing request frame that indicates BA sharing (e.g., transmission of the ACK or Block ACK to AP 1) to each Shared AP (e.g., AP 1 and AP 3).

Further, for example, in above-described control step (C), Shared AP (AP 3) that has received the BA sharing request frame from BA control AP or Shared AP (AP 2) serving as BA control AP may transmit a BA sharing frame based on the BA sharing request frame.

As described above, in the example illustrated in FIG. 8, Shared APs (AP 2 and AP 3) that have received the ACK or Block ACK from STA b transmit BA sharing frames to Sharing AP (AP 1) that does not received the ACK or Block ACK, and indicate the ACK or Block ACK from STA b. In other words, AP 1, AP 2, and AP 3 share the ACK or Block ACK from STAb.

Therefore, when Sharing PA (AP 1) does not receives the ACK or Block ACK of STAb, Sharing AP (AP 1) appropriately controls retransmission to STAb by receiving the ACK or Block ACK from another Shared AP. For example, in FIG. 8, Sharing AP (AP 1) confirms (or recognizes) that STAb has successfully received the downlink data transmitted to STA b. Thus, for example, as illustrated in FIG. 8, Sharing AP (AP 1) and Shared APs (AP 2 and AP 3) may simultaneously transmit data (e.g., new transmission data) in the next TXOP.

As described above, the AP that controls sharing of an ACK or Block ACK is defined as BA control AP, and after collecting information on ACKs or Block APs to the BA control AP, AP 100 performs control of sharing of the ACKs or Block ACKs on Sharing AP and Shared AP. This control allows Sharing AP and Shared AP to share information on an ACK or Block ACK of each STA 200 under MAP, thus reducing redundant retransmission.

Next, an exemplary configuration of frames transmitted and received in above-described control steps (A), (B), and (C) will be described.

### <BA Request Frame (Control Step (A))>

A BA request frame transmitted and received in control step (A) may be configured to include, for example, an address field of Shared AP (AP 1 serving as Sharing AP in FIG. 8) that does not receive an ACK or Block ACK.

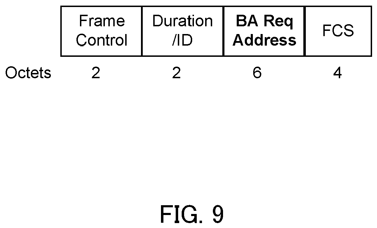

FIG. 9 illustrates an exemplary configuration of a BA request (BAReq) frame.

As illustrated in FIG. 9, a BA request frame includes, for example, an address (e.g., BA Req Address) of Shared AP (in other words, AP that transmits the BA request frame) that does not receive an ACK or Block ACK.

The address (BA Req Address) may be, for example, a Medium Access Control (MAC) address of AP 100, or may be a virtual Basic Service Set (BBS) address. For example, as the virtual BSS address, one identifier (ID) may be allocated to a plurality of APs 100 subjected to the MAP operation, or a plurality of IDs may be allocated within a particular ID range.

Further, the "frame type" specifying that the radio frame is a BA request frame may be based on at least one of the following definitions (or configurations), for example.
▪ Type value and Subtype value of a Frame Control Field
▪ Trigger frame Type
▪ Frame variant of a BlockAckReq frame

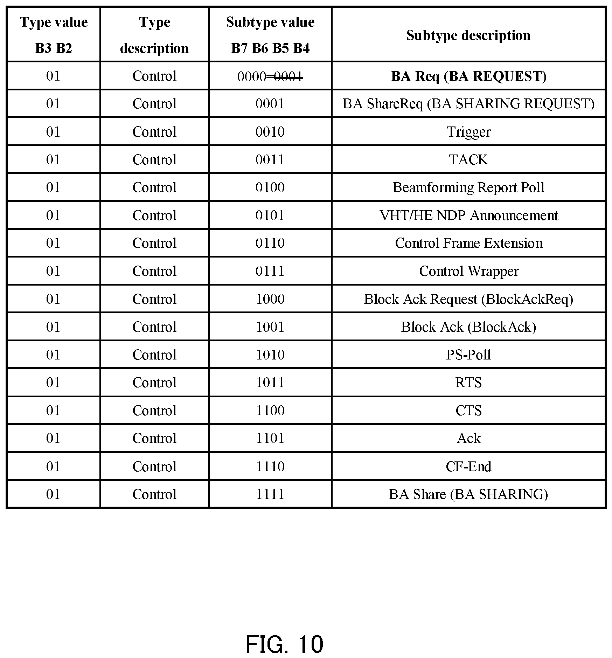

FIG. 10 illustrates an example in which the frame type is specified by a Type value and a Subtype value of a Frame Control field in the BA request frame illustrated in FIG. 9. In FIG. 10, the type of the BA request (BA Req) frame is exemplarily defined in "0000", which is an unused Subtype value (e.g., Reserved) in 11ax (e.g., Control type of Table 9-1 Valid type and subtype combinations of 11ax specification). Note that FIG. 10 illustrates the example in which the type of the BA request frame is defined in "0000", but the present disclosure is not limited thereto, and the frame type may be defined in another unused value.

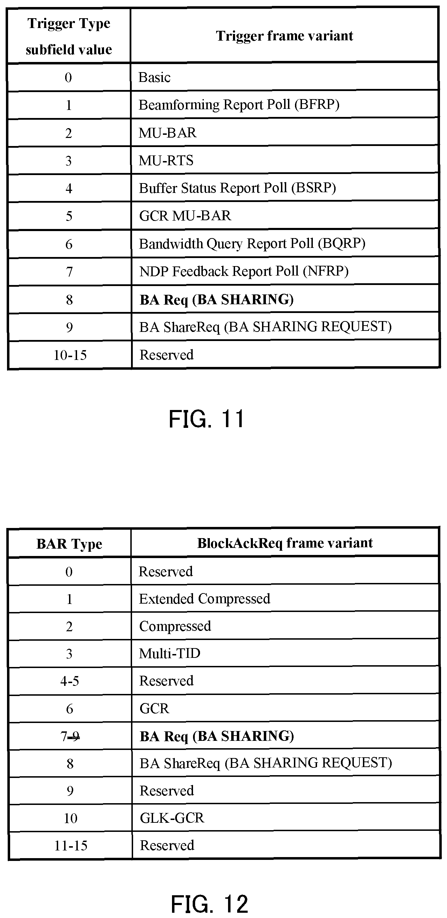

FIG. 11 illustrates an example in which, when a Trigger frame is used as a BA request frame, the type of the BA request frame (e.g., Trigger Type) is specified by a Type subfield of the Trigger frame. In FIG. 11, the type (BA Req) of the BA request frame is exemplarily defined in "8", which is an unused Trigger Type subfield value (e.g., Reserved) in 11ax (e.g., Table 9-29c Trigger Type subfield encoding of 11ax specification). Note that FIG. 11 illustrates the example in which the type of the BA request frame is defined in "8", but the present disclosure is not limited thereto, and the frame type may be defined in another unused value.

FIG. 12 illustrates an example in which, when a Block ACK request (BlockAckReq) frame is used as a BA request frame, the type of the BA request frame (e.g., Block ACK request (BAR) type) is specified by a frame variant of the BlockAckReq frame. In FIG. 12, the type (BAReq) of the BA request frame is exemplarily defined in "7", which is an unused BlockAckReq frame variant (e.g., Reserved) in 11ax (e.g., Table 9-28 BlockAckReq frame variant encoding of 11ax specification). Note that FIG. 12 illustrates the example in which the type of the BA request frame is defined in "7", but the present disclosure is not limited thereto, and the frame type may be defined in another unused value.

### <BA Sharing Request Frame (Control Step (B))>

A BA sharing request frame transmitted and received in control step (B) may be configured to include, for example, an address field of Sharing AP or Shared AP (AP 1 in FIG. 8) requesting an ACK or Block ACK.

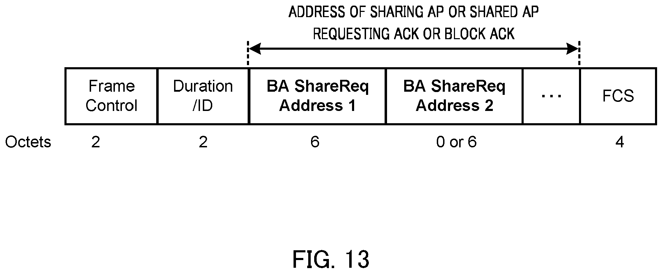

FIG. 13 illustrates an exemplary configuration of a BA sharing request (BA ShareReq) frame.

As illustrated in FIG. 13, the BA sharing request frame may include at least one address (e.g., BA ShareReq Address) of the Sharing AP or Shared AP requesting an ACK or Block ACK (e.g., an AP requesting sharing of an ACK or Block ACK), for example. For example, the address included in the BA sharing request frame (BA ShareReq Address) may include the address in the BA request frame (BA Req Address) transmitted and received in control step (A).

Further, the frame type specifying that the radio frame is a BA sharing request frame may be based on at least one of the following definitions (or configurations), for example.
▪ Type value and Subtype value of a Frame Control Field
▪ Trigger frame Type
▪ Frame variant of a BlockAckReq frame

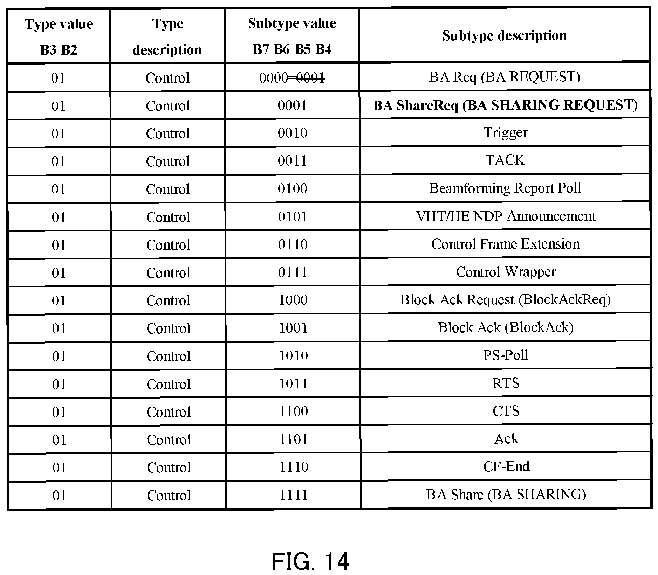

FIG. 14 illustrates an example in which the frame type is specified by a Type value and a Subtype value of a Frame Control field in the BA sharing request frame illustrated in FIG. 13. In FIG. 14, the type of the BA sharing request (BA ShareReq) frame is exemplarily defined in "0001", which is an unused Subtype value (e.g., Reserved) in 11ax (e.g., Control types of Table 9-1 Valid type and subtype combinations of 11ax specification). Note that FIG. 14 illustrates the example in which the type of the BA request frame is defined in "0001", but the present disclosure is not limited thereto, and the frame type may be defined in another unused value.

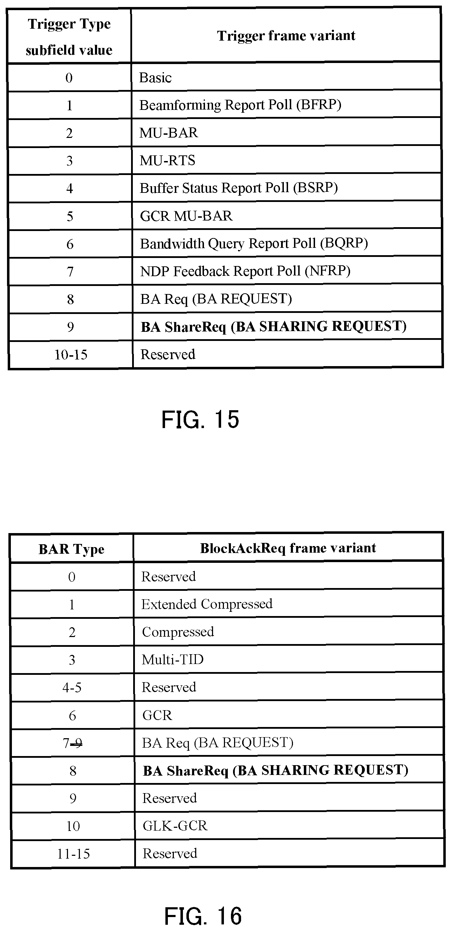

FIG. 15 illustrates an example in which, when a Trigger frame is used as a BA sharing request frame, the type of the BA sharing request frame (e.g., Trigger Type) is specified by a Type subfield of the Trigger frame. In FIG. 15, the type (BA ShareReq) of the BA sharing request frame is exemplarily defined in "9", which is an unused Trigger Type subfield value (e.g., Reserved) in 11ax (e.g., Table 9-29c Trigger Type subfield encoding of 11ax specification). Note that FIG. 15 illustrates the example in which the type of the BA sharing request frame is defined in "9", but the present disclosure is not limited thereto, and the frame type may be defined in another unused value.

FIG. 16 illustrates an example in which, when a BlockAckReq frame is used as a BA sharing request frame, the type of the BA sharing request frame (e.g., BAR type) is specified by a frame variant of the BlockAckReq frame. In FIG. 16, the type of the BA sharing request (BA ShareReq) frame is exemplarily defined in "8", which is an unused BlockAckReq frame variant (e.g., Reserved) in 11ax (e.g., Table 9-28 BlockAckReq frame variant encoding of 11ax specification). Note that FIG. 16 illustrates the example in which the type of the BA sharing request frame is defined in "8", but the present disclosure is not limited thereto, and the frame type may be defined in another unused value.

### <BA Sharing Frame (Control Step (C))>

A BA sharing frame transmitted and received in control step (C) may be configured to include, for example, information on an ACK or Block ACK.

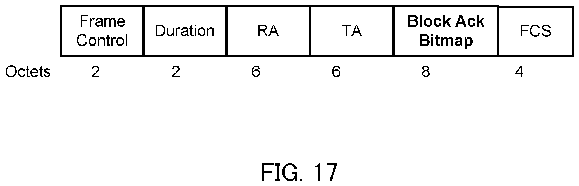

FIG. 17 illustrates an exemplarily configuration of a BA sharing (BA Share) frame.

A Block Ack Bitmap field included in the BA sharing frame illustrated in FIG. 17 may include, for example, a bitmap configured by ACK/NACK information in retransmission units such as MAC Protocol Data Unit (MPDU) or Codeword. Further, for example, in a case where the information fed back from STA 200 to AP 100 is an ACK (in other words, in a case where the information does not include a NACK), the BA sharing frame need not include a Block Ack Bitmap field when the BA sharing frame can be identified by a frame type to be described later.

Further, the frame type specifying that the radio frame is a BA sharing frame may be based on at least one of the following definitions (or configurations), for example.
▪ Type value and Subtype value of a Frame Control Field
▪ Frame variant of a BlockAck frame

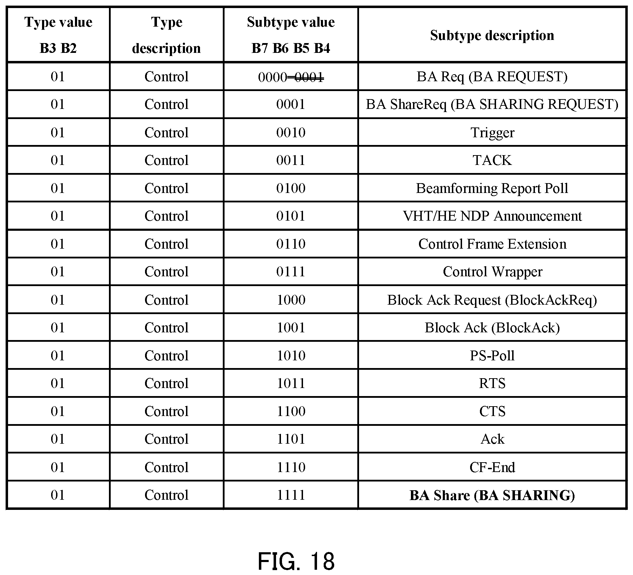

FIG. 18 illustrates an example in which the frame type is specified by a Type value and a Subtype value of a Frame Control field in the BA sharing frame illustrated in FIG. 17. In FIG. 18, the type of the BA sharing (BA Share) frame is exemplarily defined in "11 11", which is an unused Subtype value (e.g., Reserved) in 11ax (e.g., Control type of Table 9-1 Valid type and subtype combinations of 11ax specification). Note that FIG. 18 illustrates the example in which the type of the BA sharing frame is defined in "1111", but the present disclosure is not limited thereto, and the frame type may be defined in another unused value.

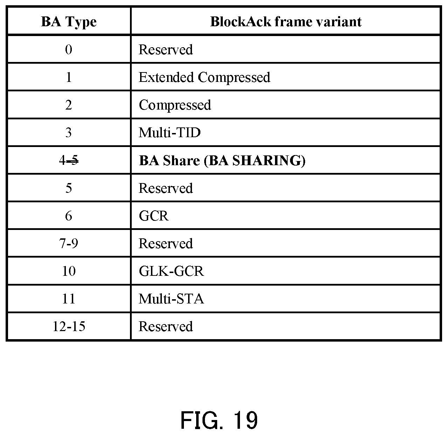

FIG. 19 illustrates an example in which, when a Block ACK (BlockAck) frame is used as a BA sharing frame, the type of the BA sharing frame (e.g., BlockAck (BA) type) is specified by a frame variant of the BlockAck frame. In FIG. 19, the type of the BA sharing (BA Share) frame is exemplarily defined in "4", which is an unused BlockAckReq frame variant (e.g., Reserved) in 11ax (e.g., Table 9-28 BlockAck frame variant encoding of 11ax specification). Note that FIG. 19 illustrates the example in which the type of the BA sharing frame is defined in "4", but the present disclosure is not limited thereto, and the frame type may be defined in another unused value.

The exemplary configuration of the frames transmitted and received in control steps (A), (B), and (C) has been described.

As described above, in the present embodiment, AP 100 receives control information (radio frame) on sharing of an ACK or Block ACK for a downlink signal in inter-base-station coordinated communication, and controls the transmission of the ACK or Block ACK to another AP based on the received control information.

For example, in the present embodiment, when control information (e.g., BA request frame) received from another AP indicates a request of an ACK or Block ACK, AP 100 serving as BA control AP indicates a transmission of the ACK or Block ACK (in other words, requests sharing of the ACK or Block ACK) to another AP to an AP that differs from another AP (AP that transmits the BA request frame) among the base stations involved in the inter-base-station coordinated communication. Further, for example, in the present embodiment, when the received control information (e.g., BA sharing request frame) indicates a request to share the ACK or Block ACK, AP 100 that differs from BA control AP determines to transmit the ACK or Block ACK to another AP indicated in the control information.

By this sharing control of an ACK or Block ACK, an ACK or Block ACK from STA200 under MAP is shared between a plurality of APs 100 (e.g., Sharing AP and Shared AP). Thus, for example, even when AP 100 does not receive an ACK or Block ACK from STA 200, AP 100 obtains the ACK or Block ACK by sharing of the ACK or Block ACK by another AP 100, and thus an appropriate determination as to whether retransmission is required is possible. Therefore, according to the present embodiment, it is possible to reduce redundant retransmission by AP 100 in the coordinated communication and to enhance the efficiency of retransmission control in the coordinated communication.

Note that the BA request frame may include, in addition to the address of AP 100 that does not receive an ACK or Block ACK, the address of STA 200 that has transmitted the ACK or Block ACK. Accordingly, the ACK or Block ACK that is not received by AP 100 transmitting the BA request frame is configured as an ACK or Block ACK to be shared between a plurality of APs 100, and another ACK or Block ACK need not be shared, which can reduce overhead in sharing control of ACK.

### (Embodiment 2)

The configuration of APs and STAs according to the present embodiment may be the same as that in Embodiment 1.

In Embodiment 1, for example, AP 100 serving as BA control AP performs sharing control of an ACK or Block ACK from STA 200 on a plurality of APs 100. In the present embodiment, AP 100 individually performs sharing control of an ACK or Block ACK. For example, when AP 100 does not receive an ACK or Block ACK from STA 200, AP 100 may individually request another AP 100 to share the ACK or Block ACK.

For example, the following control steps (A) and (B) may be provided in a BA sharing phase after the process in which each STA 200 transmits an ACK or Block ACK.

(A) When Shared AP does not receive an ACK or Block ACK, Shared AP transmits a BA sharing request (BA ShareReq) frame to Shared AP with which STA 200 having transmitted the ACK or Block ACK is associated.

(B) When Shared AP receives the BA sharing request frame, Shared AP transmits a BA sharing frame including the ACK or Block ACK of STA 200 associated with the Shared AP.

Note that TXOP (transmission opportunity) may be configured in a MAP trigger frame, which is a trigger for starting MAP data transmission, and may include a BA sharing phase including above-described control steps (A) and (B).

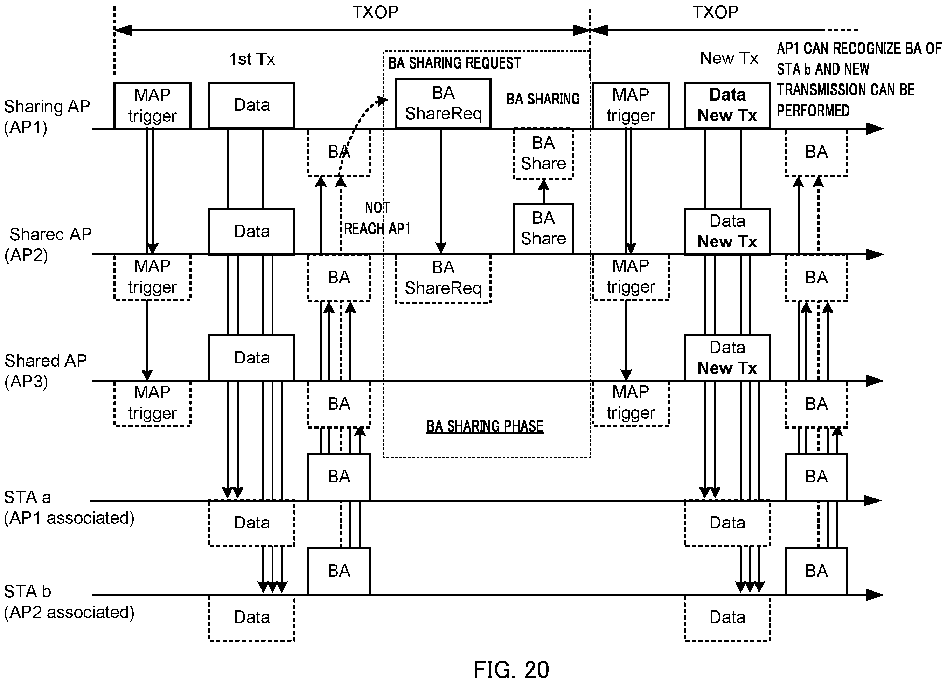

FIG. 20 illustrates an exemplary control sequence of MAP according to the present embodiment.

Note that, similarly to FIG. 3, FIG. 20 illustrates an exemplary control sequence of MAP in the communication environment illustrated in FIG. 2. For example, FIG. 20 illustrates an example in which, regarding ACKs or Block ACKs for data (e.g., initial transmission data) transmitted from Sharing AP (AP 1) and Shared AP (AP 2, AP 3), the ACK or Block ACK from STAb to Sharing AP (AP 1) does not reach Sharing AP (AP 1).

For example, in above-described control step (A), Sharing AP (AP 1) that does not receive an ACK or Block ACK from STA b may transmits a BA sharing request frame to Shared AP (AP 2) with which STAb is associated.

Further, for example, in above-described control step (B), Shared AP (AP 2) that has received the BA sharing request frame from Sharing AP (AP 1) may transmit a BA sharing frame to Sharing AP (AP 1) based on the BA sharing request frame.

As described above, in the example illustrated in FIG. 20, Shared AP(AP 2) with which STA b is associated transmits a BA sharing frame to Sharing AP(AP 1) that does not receive the ACK or Block ACK, and indicates the ACK or Block ACK from STA b. In other words, AP 1 and AP 2 share the ACK or Block ACK from STA b.

Therefore, when Sharing AP (AP 1) does not receive the ACK or Block ACK from STAb, Sharing AP (AP 1) appropriately controls retransmission to STAb by receiving the ACK or Block ACK from another Shared AP (AP 2). For example, in FIG. 20, Sharing AP (AP 1) confirms (or recognizes) that STA b has successfully received the downlink data transmitted to STAb. Thus, for example, as illustrated in FIG. 20, Sharing AP (AP 1) and Shared APs (AP 2 and AP 3) may simultaneously transmit data (e.g., new transmission data) in the next TXOP.

As described above, in the present embodiment, AP 100 that does not receive an ACK or Block ACK individually requests sharing of the ACK or Block ACK, and performs control of sharing of the ACK or Block ACK. This control allows Sharing AP and Shared AP to share information on an ACK or Block ACK from each STA 200 under MAP, thus reducing redundant retransmission.

Further, in the present embodiment, a configuration of BA control AP and a control step of a BA request for BA control AP may be eliminated compared to Embodiment 1, and thus overhead regarding ACK sharing control can be reduced.

Next, an exemplary configuration of frames transmitted and received in above-described control steps (A) and (B) will be described.

### <BA Sharing Request Frame (Control Step (A))>

A BA sharing request frame transmitted and received in control step (A) may be configured to include, for example, an address field of Sharing AP or Shared AP (AP 2 in FIG. 20) that is a request destination of sharing of an ACK or Block ACK.

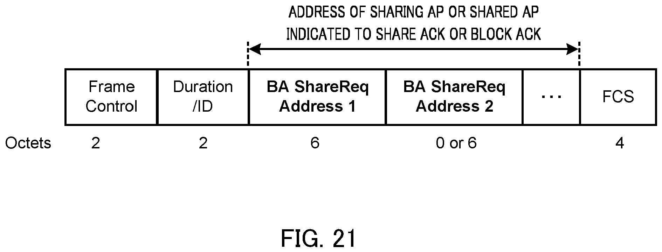

FIG. 21 illustrates an exemplary configuration of a BA sharing request (BA ShareReq) frame.

As illustrated in FIG. 21, the BA sharing request frame may include at least one address (e.g., BA ShareReq Address) of Sharing AP or Shared AP of a request destination of the ACK or Block ACK (e.g., AP to which sharing of the ACK or Block ACK is requested), for example. Note that the address (BA ShareReq Address) may be shared in a MAP trigger frame, which is a trigger for starting MAP data transmission, or may be shared in a phase that is performed prior to the MAP trigger frame and in which setup or channel estimation related to MAP is performed.

Further, the frame type specifying that the radio frame is a BA sharing request frame may be based on at least one of the following definitions (or configurations), for example.
▪ Type value and Subtype value of a Frame Control Field
▪ Trigger frame Type
▪ Frame variant of a BlockAckReq frame

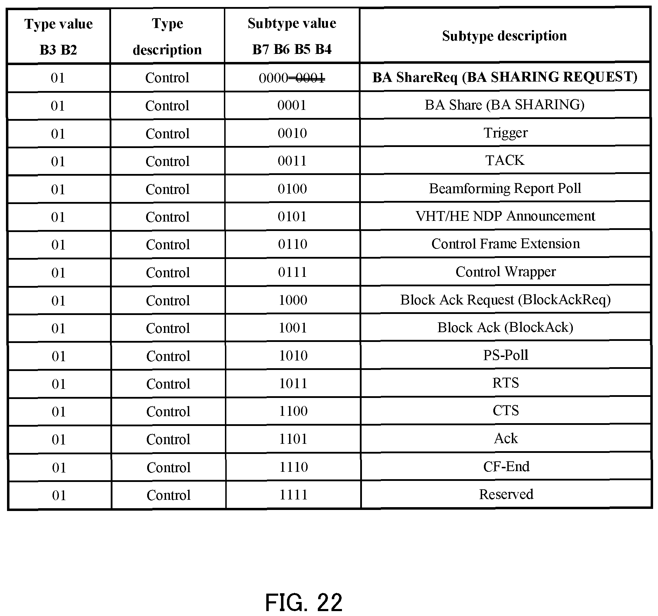

FIG. 22 illustrates an example in which the frame type is specified by a Type value and a Subtype value of a Frame Control field in the BA sharing request frame illustrated in FIG. 21. In FIG. 22, the type of the BA sharing request (BA ShareReq) frame is exemplarily defined in "0000", which is an unused Subtype value (e.g., Reserved) in 11ax (e.g., Control types of Table 9-1 Valid type and subtype combinations of 11ax specification). Note that FIG. 22 illustrates the example in which the type of the BA sharing request frame is defined in "0000", but the present disclosure is not limited thereto, and the frame type may be defined in another unused value.

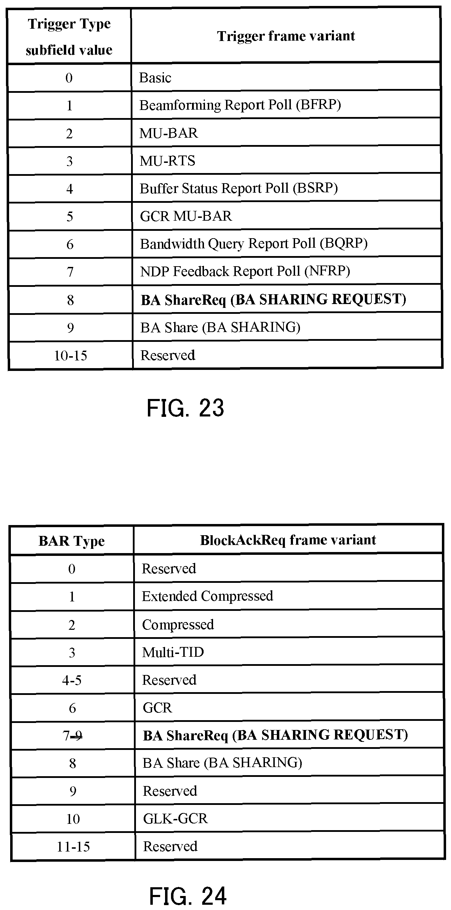

FIG. 23 illustrates an example in which, when a Trigger frame is used as a BA sharing request frame, the type of the BA sharing request frame (e.g., Trigger Type) is specified by a Type subfield of the Trigger frame. In FIG. 23, the type of the BA sharing request (BA ShareReq) frame is exemplarily defined in "8", which is an unused Trigger Type subfield value (e.g., Reserved) in 11ax (e.g., Table 9-29c Trigger Type subfield encoding of 11ax specification). Note that FIG. 23 illustrates the example in which the type of the BA sharing request frame is defined in "8", but the present disclosure is not limited thereto, and the frame type may be defined in another unused value.

FIG. 24 illustrates an example in which, when a BlockAckReq frame is used as a BA sharing request frame, the type of the BA sharing request frame (e.g., BAR type) is specified by a frame variant of the BlockAckReq frame. In FIG. 24, the type of the BA sharing request (BA ShareReq) frame is exemplarily defined in "7", which is an unused BlockAckReq frame variant (e.g., Reserved) in 11ax (e.g., Table 9-28 BlockAckReq frame variant encoding of 11ax specification). Note that FIG. 24 illustrates the example in which the type of the BA sharing request frame is defined in "7", but the present disclosure is not limited thereto, and the frame type may be defined in another unused value.

### <BA Sharing Frame (Control Step (B))>

A BA sharing frame transmitted and received in control step (B) may be configured to include, for example, information on an ACK or Block ACK, similarly to the BA sharing frame in control step (C) in Embodiment 1.

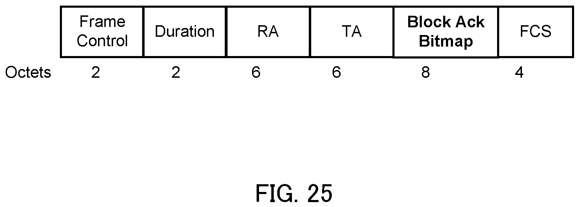

FIG. 25 illustrates an exemplary configuration of a BA sharing (BA Share) frame.

A Block Ack Bitmap field included in the BA sharing frame illustrated in FIG. 25 may include, for example, a bitmap configured by ACK/NACK information in retransmission units such as MPDU or Codeword. Further, for example, in a case where the information fed back from STA200 to AP 100 is an ACK (in other words, in a case where the information does not include a NACK), the BA sharing frame need not include a Block Ack Bitmap field when the BA sharing frame can be identified by a frame type to be described later.

The frame type specifying that the radio frame is a BA sharing frame may be based on at least one of the following definitions (or configurations), for example.
▪ Type value and Subtype value of a Frame Control Field
▪ Frame variant of a BlockAck frame

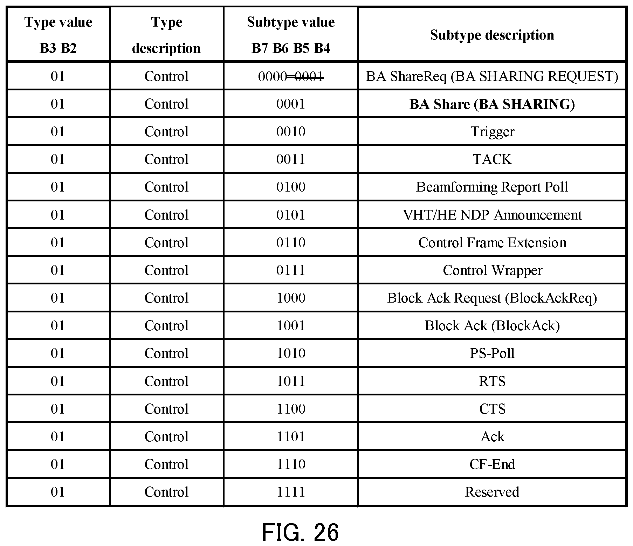

FIG. 26 illustrates an example in which the frame type is specified by a Type value and a Subtype value of a Frame Control field in the BA sharing frame illustrated in FIG. 25. In FIG. 26, the type of the BA sharing (BA Share) frame is exemplarily defined in "0001", which is an unused Subtype value (e.g., Reserved) in 11ax (e.g., Control type of Table 9-1 Valid type and subtype combinations of 11ax specification). Note that FIG. 26 illustrates the example in which the type of the BA sharing frame is defined in "0001", but the present disclosure is not limited thereto, and the frame type may be defined in another unused value.

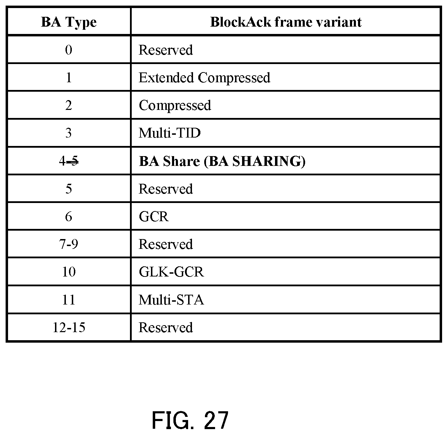

FIG. 27 illustrates an example in which, when a Block ACK (BlockAck) frame is used as a BA sharing frame, the type of the BA sharing frame (e.g., BA type) is specified by a frame variant of the BlockAck frame. In FIG. 27, the type of the BA sharing (BA Share) frame is exemplarily defined in "4", which is an unused BlockAckReq frame variant (e.g., Reserved) in 11ax (e.g., Table 9-28 BlockAck frame variant encoding of 11ax specification). Note that FIG. 27 illustrates the example in which the type of the BA sharing frame is defined in "4", but the present disclosure is not limited thereto, and the frame type may be defined in another unused value.

The exemplary configuration of the frames transmitted and received in control steps (A) and (B) has been described.

As described above, in the present embodiment, AP 100 receives control information (radio frame) on sharing of an ACK or Block ACK for a downlink signal in inter-base-station coordinated communication, and controls the transmission of the ACK or Block ACK to another AP based on the received control information. For example, in the present embodiment, when control information (e.g., BA sharing request frame) received from another AP indicates a request to share an ACK or Block ACK of STA 200 associated with AP 100, AP 100 determines to transmit the ACK of Block ACK for another AP.

By this sharing control of an ACK or Block ACK, an ACK or Block ACK from STA 200 under MAP is shared between a plurality of APs 100 (e.g., Sharing AP and Shared AP). Thus, for example, even when AP 100 does not receive an ACK or Block ACK from STA 200, AP 100 obtains the ACK or Block ACK by sharing of the ACK or Block ACK by another AP 100, and thus an appropriate determination as to whether retransmission is required is possible. Therefore, according to the present embodiment, it is possible to reduce redundant retransmission by AP 100 in the coordinated communication and to enhance the efficiency of retransmission control in the coordinated communication.

### (Embodiment 3)

The configuration of APs and STAs according to the present embodiment may be the same as that in Embodiment 1.

In the present embodiment, a method for specifying Shared AP that requests sharing of an ACK or Block ACK in a MAP trigger frame, which is a trigger for starting MAP data transmission, will be described.

For example, the following control steps (A) and (B) may be provided in a MAP trigger frame and in a BA sharing phase after the process in which each STA 200 transmits an ACK or Block ACK.
(A) Sharing AP specifies a combination of Shared AP that requests sharing of an ACK or Block ACK and STA 200 that transmits the ACK or Block ACK, to Shared AP in a MAP trigger frame.
(B) When the combination of Shared AP and STA 200 is specified, Shared AP transmits, to the Shared AP included in the combination, a BA sharing frame including the ACK or Block ACK from STA 200 included in the combination.

Note that TXOP (transmission opportunity) may be configured in a MAP trigger frame, which is a trigger for starting MAP data transmission, and may include a BA sharing phase including above-described control step (B).

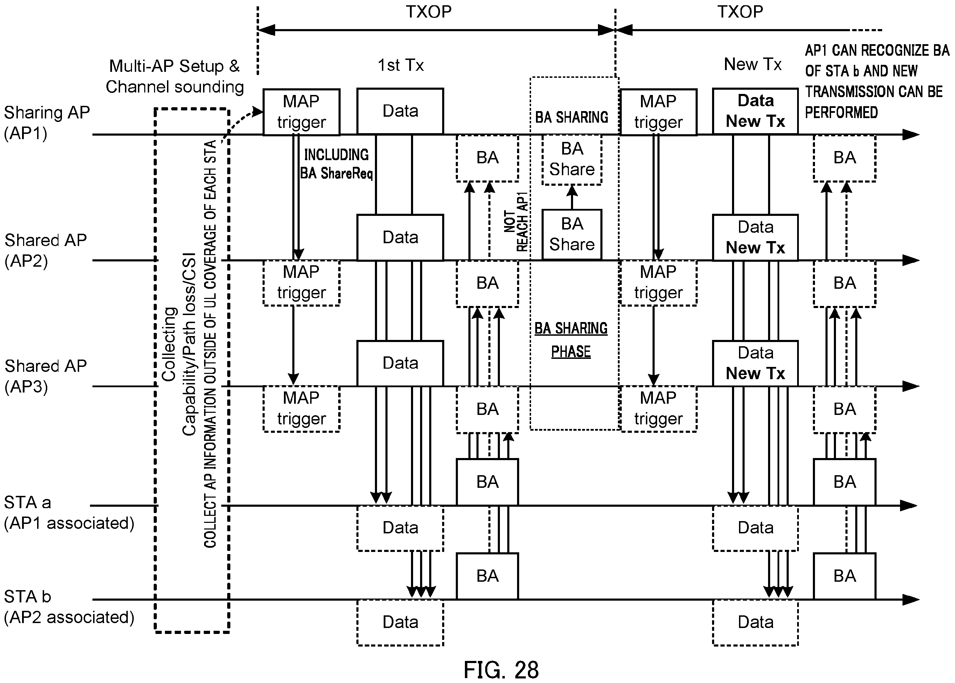

FIG. 28 illustrates an exemplary control sequence of MAP according to the present embodiment.

Note that, similarly to FIG. 3, FIG. 28 illustrates an exemplary control sequence of MAP in the communication environment illustrated in FIG. 2. For example, FIG. 28 illustrates an example in which, regarding ACKs or Block ACKs for data (e.g., initial transmission data) transmitted from Sharing AP (AP 1) and Shared APs (AP 2 and AP 3), the ACK or Block ACK from STAb to Sharing AP (AP 1) does not reach Sharing AP (AP 1).

For example, in above-described control step (A), Sharing AP (AP 1) specifies a combination of Shared AP that requests sharing of an ACK or Block ACK and STA 200 that transmits the ACK or Block ACK. In other words, Sharing AP (AP 1) may specify a combination of AP 100 that does not possibly receive an ACK or Block ACK from STA 200 and STA 200.

For example, Sharing AP (AP 1) may determine the uplink coverage of each STA 200 based on a propagation loss between each STA 200 and each Shared AP or a channel estimation value collected in a Multi-AP Channel sounding phase performed before MAP data transmission. Then, Sharing AP (AP 1) may determine a combination of Shared AP existing outside of the uplink coverage of each STA 200 and STA 200, for example. In the example of FIG. 28, for example, a combination of STA b and AP 1 existing outside of the uplink coverage of STAb may be specified.

Note that, in the example illustrated in FIG. 28, a case has been described in which AP 100 determines the uplink coverage of each STA 200 based on the propagation loss or the channel estimation collected in a Multi-AP Channel sounding phase performed before MAP data transmission to determine the above-described combination, but the above-described combination may be determined periodically or non-periodically. Accordingly, the combination of AP 100 and STA 200 is configured depending on the propagation condition, and thus adaptive optimization of retransmission control is possible.

Further, for example, in above-described control step (B), Shared AP(AP 2) specified in the MAP Trigger frame in control step (A) may transmit a BA sharing frame to Sharing AP (AP 1) indicated in the combination.

As described above, in the example illustrated in FIG. 28, Shared AP (AP 2) to which the combination of AP 1 and STA b is specified transmits a BA sharing frame to Sharing AP (AP 1) that does not receive the ACK or Block ACK, and indicates the ACK or Block ACK from STAb. In other words, AP 1 and AP 2 share the ACK or Block ACK from STAb.

Therefore, when Sharing AP (AP 1) does not receive the ACK or Block ACK from STAb, Sharing AP (AP 1) appropriately controls retransmission to STAb by receiving the ACK or Block ACK from another Shared AP (AP 2). For example, in FIG. 28, Sharing AP (AP 1) confirms (or recognizes) that STA b has successfully received the downlink data transmitted to STAb. Thus, for example, as illustrated in FIG. 28, Sharing AP (AP 1) and Shared APs (AP 2 and AP 3) may simultaneously transmit data (e.g., new transmission data) in the next TXOP.

As described above, in the present embodiment, control of sharing of an ACK or Block ACK is performed by specifying the combination of AP 100 that does not receive an ACK or Block ACK and STA200 in a MAP trigger frame. This control allows Sharing AP and Shared AP to share information on an ACK or Block ACK from each STA 200 under MAP, thus reducing redundant retransmission.

Further, in the present embodiment, for example, a configuration of BA control AP in a BA sharing phase and a control step of a BA sharing request may be eliminated compared to Embodiments 1 and 2, and thus overhead regarding ACK sharing control can be reduced.

Next, an exemplary configuration of frames transmitted and received in above-described control steps (A) and (B) will be described.

### <MAP trigger frame>

A MAP trigger frame transmitted and received in control step (A) may be configured to include, for example, information on STA 200 whose ACK or Block ACK is shared in an information field for each AP 100 (e.g., "Per AP Info").

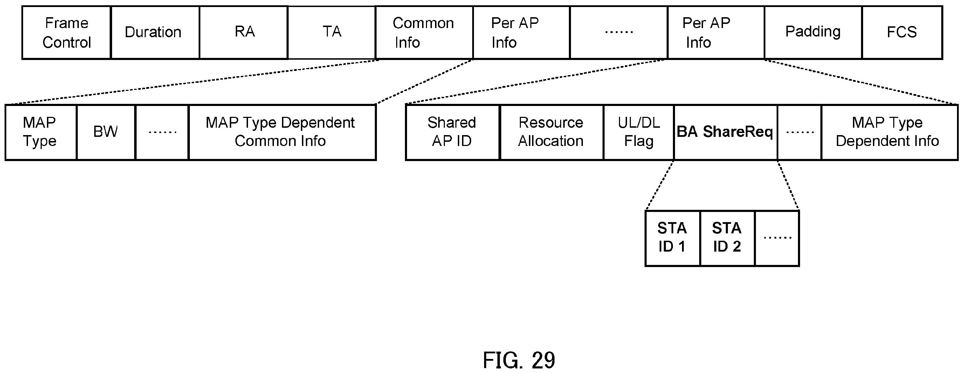

FIG. 29 illustrates an exemplary configuration of a MAP trigger frame.

In the example illustrated in FIG. 29, a BA sharing request (BA ShareReq) field may be configured in an information field for each AP 100 (Per AP Info) in the MAP trigger frame. In addition, the BA sharing request field illustrated in FIG. 29 may include, for example, an identifier (ID) of STA 200 whose ACK or Block ACK is shared.

For example, in the example illustrated in FIG. 28, an ID of STA b may be configured in a BA ShareReq field in a Per AP Info field that corresponds to Sharing AP (AP 1).

Note that a MAC address (e.g., a 48bit) may be used for the STA ID, and an identifier of STA called a Short ID may be defined. The Short ID may be defined, being included in, for example, an Association ID (AID) specified in 11ax specification, or may be allocated to Reserved of AID 12. Using a Short ID can reduce overhead compared to the case of using a MAC address.

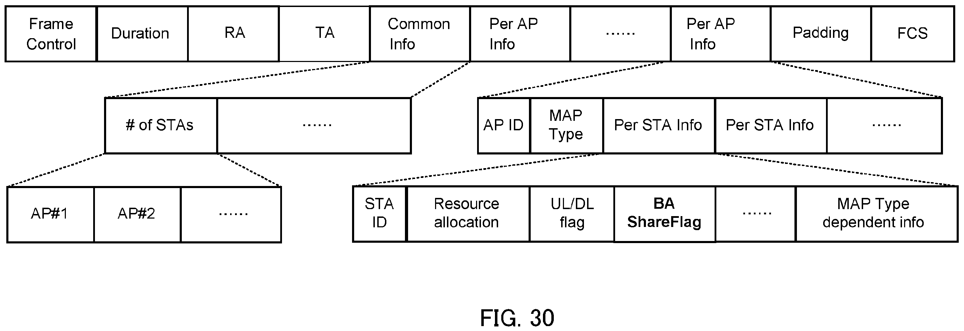

FIG. 30 illustrates another exemplary configuration of the MAP trigger frame.

In the example illustrated in FIG. 30, information indicating whether to share an ACK or Block ACK (e.g., "BA sharing flag (BA ShareFlag)") may be configured in an information field for each STA 200 (e.g., Per STA Info) included in an information field for each AP 100 (Per AP Info) in the MAP trigger frame. The BA sharing flag may be, for example, one-bit information indicating whether the ACK or Block ACK is to be shared.

For example, in the example illustrated in FIG. 28, the BA ShareFlag may indicate to share an ACK or Block ACK in a Per STA info field that corresponds to STA b in a Per AP Info field that corresponds to Sharing AP (AP 1).

Note that, in the examples illustrated in FIGS. 29 and 30, the information on the combination of AP 100 and STA 200 is included in the information for each AP 100 (Per AP Info) in the MAP trigger frame, but the present disclosure is not limited thereto, and the information on the combination of AP 100 and STA 200 may be defined in the common information (Common info) field in the MAP trigger frame. For example, the information on the plurality of above-described combinations may be defined collectively in a Common info field.

### <BA Sharing Frame (Control Step (B))>

ABA sharing frame transmitted and received in control step (B) may be configured to include, for example, information on an ACK or Block ACK, similarly to the BA sharing frame in control step (C) in Embodiment 1.

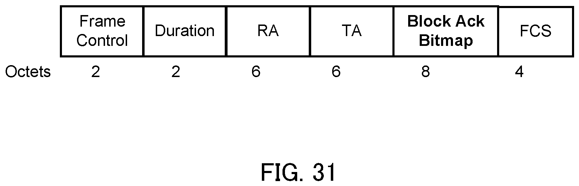

FIG. 31 illustrates an exemplary configuration of a BA sharing (BA Share) frame.

A Block Ack Bitmap field included in the BA sharing frame illustrated in FIG. 31 may include, for example, a bitmap configured by ACK/NACK information in retransmission units such as MPDU or Codeword. Further, for example, in a case where the information fed back from STA 200 to AP 100 is an ACK (in other words, in a case where the information does not include a NACK), the BA sharing frame need not include a Block Ack Bitmap field when the BA sharing frame can be identified by a frame type to be described later.

Further, the frame type specifying that the radio frame is a BA sharing frame may be based on at least one of the following definitions (or configurations), for example.
▪ Type value and Subtype value of a Frame Control Field
▪ Frame variant of a BlockAck frame

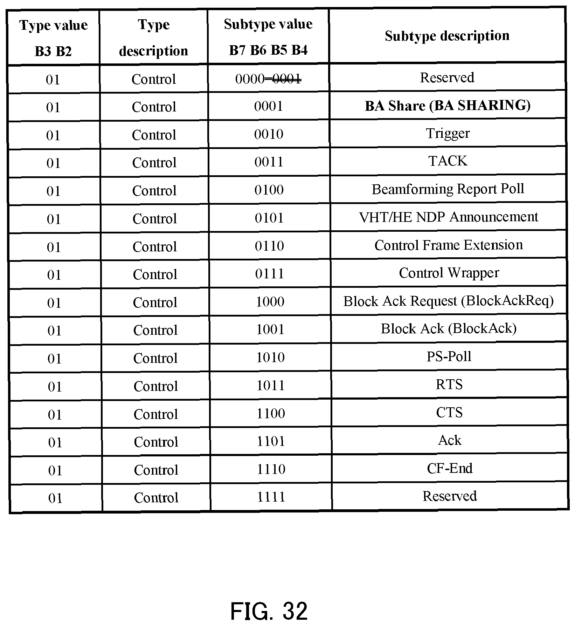

FIG. 32 illustrates an example in which the frame type is specified by a Type value and a Subtype value of a Frame Control field in the BA sharing frame illustrated in FIG. 31. In FIG. 32, the type of the BA sharing (BA Share) frame is exemplarily defined in "0001", which is an unused Subtype value (e.g., Reserved) in 11ax (e.g., Control type of Table 9-1 Valid type and subtype combinations of 11ax specification). Note that FIG. 32 illustrates the example in which the type of the BA sharing frame is exemplarily defined in "0001", but the present disclosure is not limited thereto, and the frame type may be defined in another unused value.

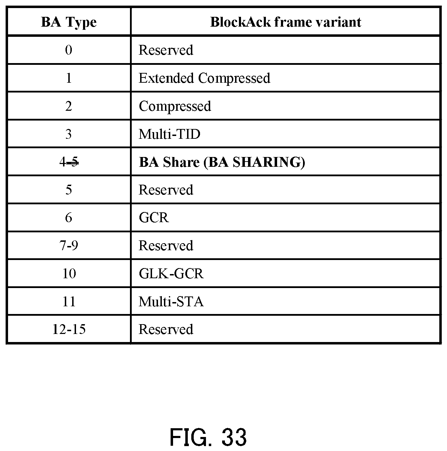

FIG. 33 illustrates an example in which, when a Block ACK (BlockAck) frame is used as a BA sharing frame, the type of the BA sharing frame (e.g., BA type) is specified by a frame variant of the BlockAck frame. In FIG. 33, the type of the BA sharing (BA Share) frame is exemplarily defined in "4", which is an unused BlockAckReq frame variant (e.g., Reserved) in 11ax (e.g., Table 9-28 BlockAck frame variant encoding of 11ax specification). Note that FIG. 32 illustrates the example in which the type of the BA sharing frame is defined in "4", but the present disclosure is not limited thereto, and the frame type may be defined in another unused value.

The exemplary configuration of the frames transmitted and received in control steps (A) and (B) has been described.

As described above, in the present embodiment, AP 100 receives control information (radio frame) on sharing of an ACK or Block ACK for a downlink signal in inter-base-station coordinated communication, and controls the transmission of the ACK or Block ACK to another AP based on the received control information. For example, in the present embodiment, when the received control information (e.g., MAP trigger frame) indicates a combination of another AP that does not receive an ACK or Block ACK among APs involved in the inter-base-station coordinated communication and a transmission source of the ACK or Block ACK (e.g., STA 200), AP 100 determines to transmit the ACK or Block ACK from the transmission source to above-described another AP.

By this sharing control of an ACK or Block ACK, an ACK or Block ACK from STA200 under MAP is shared between a plurality of APs 100 (e.g., Sharing AP and Shared AP). Thus, for example, even when AP 100 does not receive an ACK or Block ACK from STA 200, AP 100 obtains the ACK or Block ACK by sharing of the ACK or Block ACK by another AP 100, and thus an appropriate determination as to whether retransmission is required is possible. Therefore, according to the present embodiment, it is possible to reduce redundant retransmission by AP 100 in the coordinated communication and to enhance the efficiency of retransmission control in the coordinated communication.

### (Embodiment 4)

The configuration of APs and STAs according to the present embodiment may be the same as that in Embodiment 1.

In the present embodiment, a method will be described in which each Shared AP transmits a BA sharing frame regardless of the reception status of an ACK or Block ACK in each Shared AP.

For example, the following control steps (A) and (B) may be provided in a MAP trigger frame and in a BA sharing phase after the process in which each STA 200 transmits an ACK or Block ACK.
(A) Sharing AP indicates a plurality of Shared APs (e.g., all Shared AP) to share an ACK or Block ACK in a MAP trigger frame.
(B) After receiving an ACK or Block ACK from STA 200, Shared AP transmits a BA sharing frame including the ACK or Block ACK.

Note that TXOP (transmission opportunity) may be configured in a MAP trigger frame, which is a trigger for starting MAP data transmission, and may include a BA sharing phase including above-described control step (B).

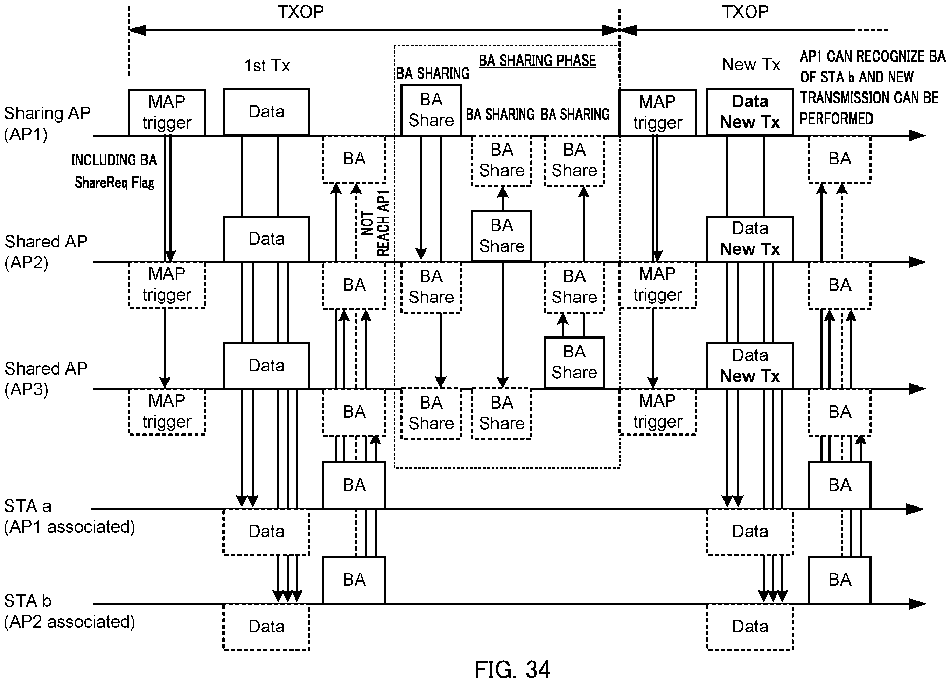

FIG. 34 illustrates an exemplary control sequence of MAP according to the present embodiment.

Note that, similarly to FIG. 3, FIG. 34 illustrates an exemplary control sequence of MAP in the communication environment illustrated in FIG. 2. For example, FIG. 34 illustrates an example in which, regarding ACKs or Block ACKs for data (e.g., initial transmission data) transmitted from Sharing AP (AP 1) and Shared APs (AP 2 and AP 3), the ACK or Block ACK from STAb to Sharing AP (AP 1) does not reach Sharing AP (AP 1).

For example, in above-described control step (A), Sharing AP (AP 1) may configure information indicating (or requesting) sharing of an ACK or Block ACK to a plurality of Shared APs (AP 2 and AP 3). For example, the information indicating sharing of an ACK or Block ACK may be a one-bit flag (BA ShareReqFlag). For example, when this flag is set as valid (e.g., when sharing of an ACK is indicated), each Shared AP may operate, assuming that a BA sharing phase of control step (B) is to be configured. On the other hand, when this flag is set as invalid (e.g., when sharing of an ACK is not indicated), each Shared AP may operate, assuming that the BA sharing phase of control step (B) is not to be configured.

Further, in control step (A), Shared AP (AP 1) may specify a multiplexing scheme for transmitting the BA sharing frame in control step (B). The multiplexing schemes for the BA sharing frame include time division multiplexing (TDMA: Time Division Multiple Access), frequency-division multiplexing (e.g., OFDMA: Orthogonal Frequency Division Multiple Access), or space division multiplexing (e.g., MU-MIMO: Multi User-Multiple Input Multiple Output).

Further, for example, in above-described control step (B), Shared AP may transmit the BA sharing frame in accordance with the multiplexing scheme specified in the MAP Trigger frame in control step (A).

As described above, in the embodiment illustrated in FIG. 34, a plurality of Shared APs (AP 1, AP 2, and AP 3) indicated to share an ACK in a MAP trigger frame transmits BA sharing frames. Thus, for example, Shared APs (AP 2 and AP 3) indicate the ACK or Block ACK from STAb to Sharing AP (AP 1) that does not receive the ACK or Block ACK from STAb. In other words, AP 1, AP 2, and AP 3 share the ACK or Block ACK from STAb.

Therefore, when Sharing AP (AP 1) does not receive the ACK or Block ACK from STAb, Sharing AP (AP 1) appropriately controls retransmission to STAb by receiving the ACK or Block ACK from another Shared AP (AP 2). For example, in FIG. 34, Sharing AP (AP 1) confirms (or recognizes) that STA b has successfully received the downlink data transmitted to STAb. Thus, for example, as illustrated in FIG. 34, Sharing AP (AP 1) and Shared APs (AP 2 and AP 3) may simultaneously transmit data (e.g., new transmission data) in the next TXOP.

As described above, in the present embodiment, control of indicating sharing of an ACK or Block ACK is performed on a plurality of APs 100 in a MAP trigger frame. This control allows Sharing AP and Shared AP to share information on an ACK or Block ACK from each STA 200 under MAP, thus reducing redundant retransmission.

Further, in the present embodiment, for example, a configuration of BA control AP in a BA sharing phase and a control step of a BA sharing request may be eliminated compared to Embodiments 1 and 2, and thus overhead regarding ACK sharing control can be reduced.

Next, an exemplary configuration of frames transmitted and received in above-described control steps (A) and (B) will be described.

### <MAP trigger frame>

A MAP trigger frame transmitted and received in control step (A) may be configured to include, for example, information indicating sharing of an ACK or Block ACK to a plurality of APs 100 (e.g., all Shared APs).

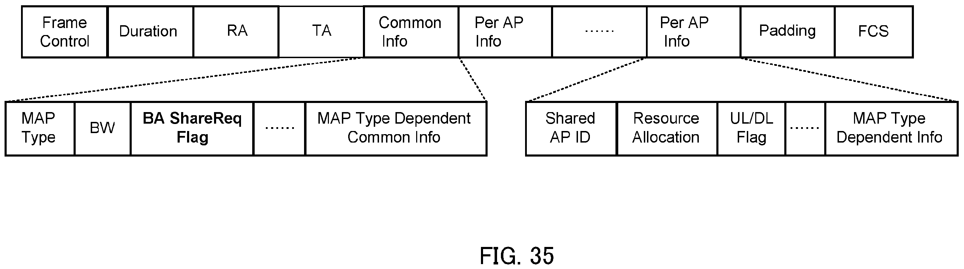

FIG. 35 illustrates an exemplary configuration of a MAP trigger frame.

In the example illustrated in FIG. 35, in a MAP trigger frame, information indicating BA sharing (e.g., one-bit BA sharing request flag (BA ShareReq Flag)) to a plurality of Shared APs may be configured in an information (Common info) field common to a plurality of APs 100.

Note that FIG. 35 illustrates a case where the BA sharing request flag (BA ShareReq Flag) is configured in a common information field, but the present disclosure is not limited thereto, and the BA sharing request flag may be configured in a field that differs from the common information field.

### <BA Sharing Frame (Control Step (B))>

ABA sharing frame transmitted in control step (B) may be configured to include, for example, information on an ACK or Block ACK, similarly to the BA sharing frame in control step (C) in Embodiment 1. Further, the exemplary configuration of the BA sharing frame and the exemplary specification of the frame type may be the same as the BA sharing frame in Embodiment 3, for example.

The exemplary configuration of the frames transmitted and received in control steps (A) and (B) has been described.

As described above, in the present embodiment, AP 100 receives control information (e.g., radio frame) on sharing of an ACK or Block ACK for a downlink signal in inter-base-station coordinated communication, and controls the transmission of the ACK or Block ACK to another AP based on the received control information. For example, in the present embodiment, when the received control information (e.g., MAP trigger frame) indicates to share an ACK or Block ACK, AP 100 determines to transmit the ACK or Block ACK for AP 100 involved in the inter-base-station coordinated communication.

By this sharing control of an ACK or Block ACK, an ACK or Block ACK from STA200 under MAP is shared between a plurality of APs 100 (e.g., Sharing AP and Shared AP). Thus, for example, even when AP 100 does not receive an ACK or Block ACK from STA 200, AP 100 obtains the ACK or Block ACK by sharing of the ACK or Block ACK by another AP 100, and thus an appropriate determination as to whether retransmission is required is possible. Therefore, according to the present embodiment, it is possible to reduce redundant retransmission by AP 100 in the coordinated communication and to enhance the efficiency of retransmission control in the coordinated communication.

### (Embodiment 5)

The configuration of APs and STAs according to the present embodiment may be the same as that in Embodiment 1.

In the present embodiment, for example, a method will be described in which whether to share an ACK or Block ACK between Shared APs is determined depending on the type of a line (e.g., radio line or wired line) between the Shared APs.

The information in which the sharing configuration and the transmission are determined by AP 100 (e.g., Sharing AP) may be, for example, at least one of the following:
▪ BA request frame in Embodiment 1
▪ BA sharing request frame in Embodiment 1 or 2
▪ Information on the combination of AP 100 and STA200 in Embodiment 3
▪ Information on BA sharing in a plurality of Shared APs in Embodiment 4

Note that AP 100 may obtain information on the line type between Shared APs, for example, in a Multi-AP Channel sounding phase performed before MAP data transmission, or may obtain in another period.

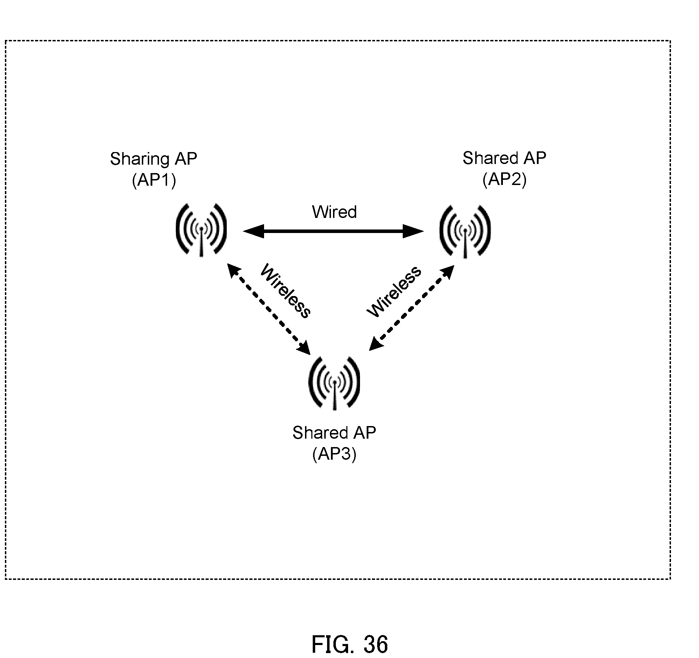

FIG. 36 illustrates an exemplary line configuration between Shared APs. In the example illustrated in FIG. 36, Sharing AP (AP 1) and Shared AP (AP 2) are connected with each other by a wired line, and Sharing AP (AP 1) and Shared AP (AP 3), and Shared AP (AP 2) and Shared AP(AP 3) are connected with each other by a radio line.

For example, when a relay line between Shared APs (e.g., between AP 1 and AP 2 in FIG. 36) is in an idealized communication environment (e.g., low-delay wired line such as Ethernet (registered trademark) or optical fiber), AP 100 may transmit at least one of a BA request frame, a BA sharing request frame, information on a combination of AP 100 and STA 200, and a BA sharing frame in a wired frame such as an Ethernet frame of IEEE 802.3, without transmitting it by radio.

On the other hand, for example, when a relay line between Shared APs (e.g., between AP 1 and AP 3 or between AP 2 and AP 3 in FIG. 36) is not in the idealized communication environment (e.g., in a case of a line in which a delay is likely to be larger than that of the wired line, such as a radio line), AP 100 transmits, by radio, at least one of a BA request frame, a BA sharing request frame, information on a combination of AP 100 and STA 200, and a MAP trigger frame including a BA sharing frame.

Further, for example, in a relay line configuration in which wired and radio lines are mixed, AP 100 may transmit at least one of a BA sharing request frame and information on a combination of AP 100 and STA 200 in a MAP trigger frame through the radio line path, and may transmit a BA request frame or a BA sharing frame in a wired frame such as an Ethernet frame of IEEE 802.3 through the wired line path. Note that the frame transmitted in each of the wired line and the radio line is not limited to the above-described example, and may be another frame.

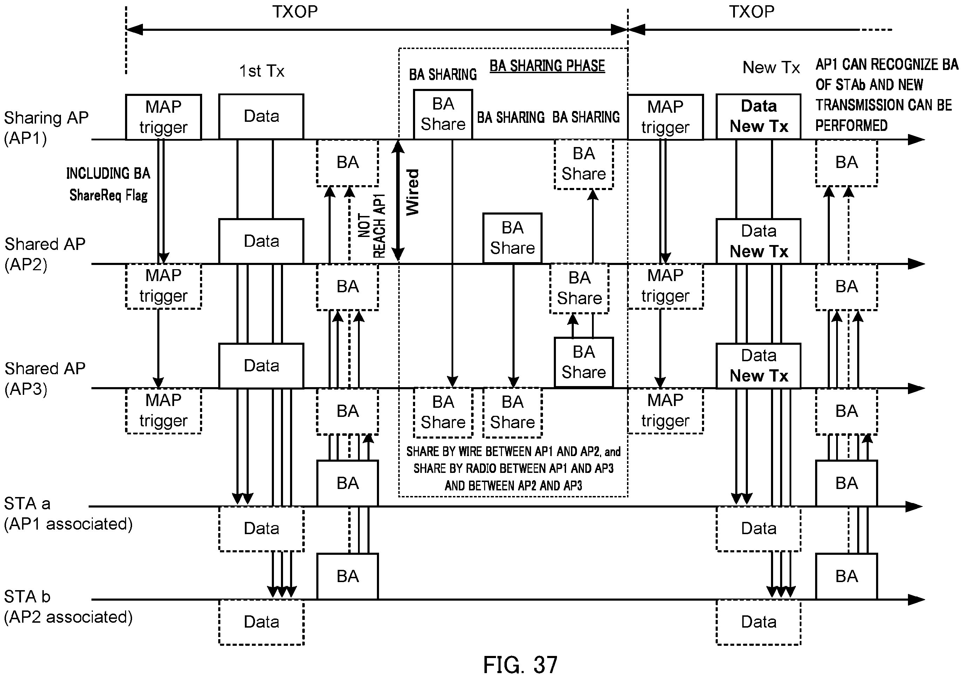

FIG. 37 illustrates an exemplary control sequence of MAP.

In FIG. 37, Sharing AP (AP 1) and Shared AP (AP 2) are exemplarily connected with each other by a line in which wired and radio lines are mixed, and Sharing AP (AP 1) and Shared AP (AP 3), and Shared AP (AP 2) and Shared AP (AP 3) are connected with each other by a radio line.

Further, FIG. 37 illustrates an example in which, regarding ACKs or Block ACKs for data (e.g., initial transmission data) transmitted from Sharing AP (AP 1) and Shared APs (AP 2 and AP 3), the ACK or a Block ACK from STAb to Sharing AP (AP 1) does not reach Sharing AP (AP 1). Note that the control sequence illustrated in FIG. 37 is, for example, the same as the control sequence in Embodiment 4.

As illustrated in FIG. 37, for example, between Sharing AP (AP 1) and Shared AP (AP 2) connectable with each other by a wired line, at least one piece of information (e.g., BA sharing frame) on an ACK or Block ACK may be transmitted by a wired frame, and need not be transmitted by radio. For example, in FIG. 37, a BA sharing frame from Sharing AP (AP 1) to Shared AP (AP 2) and a BA sharing frame from Shared AP (AP 2) to Sharing AP (AP 1) need not be transmitted.

According to the present embodiment, AP 100 determines whether to share an ACK or Block ACK (e.g., presence or absence of a sharing request of an ACK or Block ACK by radio) with another AP, based on the line type (e.g., radio line or wired line) for above-described another AP. Thus, AP 100 can share information on an ACK or Block ACK of each STA 200 in a short time by using both a wired frame and a radio frame, which results in reducing redundant retransmission.

Note that FIG. 37 exemplarily illustrates a control sequence in Embodiment 4, but the present disclosure is not limited thereto, and the operation depending on a line type as described in the present embodiment may be applied to any of Embodiments 1 to 3.

Further, in the present embodiment, a case has been described in which sharing control is performed depending on a line type such as a radio line and a wired line as an example, but the present disclosure is not limited thereto, and for example, sharing control may be performed depending on a communication performance (or communication scheme).

Embodiments of the present disclosure have been described above.

### (Other Embodiments)

In each of the above-described Embodiments, AP 100 may determine whether to execute the above-described control of BA sharing, for example, based on MAP coordination schemes. For example, when the MAP coordination scheme is JT, AP 100 may execute the above-described control of BA sharing, and when the MAP coordination scheme differs from JT, AP 100 need not execute the above-described control of BA sharing. Further, when AP 100 receives a BA sharing request frame from another AP 100, AP 100 may respond to the BA sharing request (e.g., transmit a BA sharing frame) when the MAP coordination scheme is JT, and when the MAP coordination scheme differs from JT, AP 100 need not respond to the BA sharing request. Furthermore, for example, in above-described Embodiments 3 to 5, when the MAP coordination scheme is JT, the BA sharing request may be indicated to Shared AP in a MAP trigger frame, and when the MAP coordination scheme differs from JT, the BA sharing request need not be indicated to Shared AP in the MAP trigger frame.

Further, in each of the above-described embodiment, the methods for sharing an ACK or Block ACK between APs 100 have been described, but the signal or information shared between APs 100 is not limited to an ACK or Block ACK, and may be another signal or information. For example, the sharing methods in the above-described embodiments may be applied to information expected to be shared between APs, such as a channel estimation value or information on data buffer management.

Further, there are two types of Block ACK: Immediate Block Ack and Delayed Block Ack, but the above-described embodiments can be applied to both types.

Furthermore, the definitions of the information on BA sharing in a Frame Control field, a Trigger Type, a BlockAckReq frame variant, and a BlockAck frame variant described in the above Embodiments are merely examples and are not limited thereto, and another value may be defined.

In addition, the configurations of a BA request frame, a BA sharing request frame, a BA sharing frame, and a Trigger frame described in the above Embodiments are merely examples and are not limited thereto, and another configuration may be used. For example, in those frame configurations, some fields need not be configured, and another field may be further configured.

In addition, in the above-described embodiments, AP indicating coordinated communication and AP that is indicated to perform the coordinated communication have been represented as "Sharing AP" and "Shared AP", respectively, but the present disclosure is not limited thereto, and other terms may be used.

Furthermore, the above-described embodiments have been described based on a format of 11be as an example, but the format to which an embodiment of the present disclosure is applied is not limited to the format of 11be. An embodiment of the present disclosure may be applied to, for example, IEEE 802.11bd (Next Generation V2X (NGV)), which is a next generation standard from IEEE 802. 11p, which is an on-vehicle standard.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a radio transceiver (transceiver) and processing/control circuitry. The radio transceiver may comprise and/or function as a receiver and a transmitter. The radio transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A base station according to an embodiment of the present disclosure includes: reception circuitry, which, in operation, receives control information on sharing of a response signal for a downlink signal in inter-base-station coordinated communication; and control circuitry, which, in operation, controls transmission of the response signal to another base station based on the control information.

In the embodiment of the present disclosure, the control circuitry indicates transmission of the response signal to the another base station to a base station that differs from the another base station among base stations involved in the inter-base-station coordinated communication when the control information received from the another base station indicates a request for the response signal.

In the embodiment of the present disclosure, the control circuitry determines to transmit the response signal to the another base station indicated in the control information when the received control information indicates a request for sharing of the response signal.

In the embodiment of the present disclosure, the control circuitry determines to transmit the response signal to the another base station when the control information received from the another base station indicates a request for sharing of the response signal of a terminal associated with the base station.

In the embodiment of the present disclosure, the control circuitry determines to transmit, to the another base station, the response signal from a transmission source when the received control information indicates a combination of the another base station that does not receive the response signal, among base stations involved in the inter-base-station coordinated communication, and the transmission source of the response signal.

In the embodiment of the present disclosure, the control information is included in a signal that triggers starting of the inter-base-station coordinated communication.

In the embodiment of the present disclosure, the control circuitry determines to transmit the response signal for a base station involved in the inter-base-station coordinated communication when the received control information indicates to share the response signal.

In the embodiment of the present disclosure, the control information is included in a signal that triggers starting of the inter-base-station coordinated communication.

In the embodiment of the present disclosure, the control circuitry determines whether to share the response signal with the another base station based on a line type for the another base station.

A communication apparatus includes a transmitter that transmits a response signal for a downlink signal in coordinated communication to a first base station performing the coordinated communication, and information on the response signal is shared with a second base station performing the coordinated communication.

In the embodiment of the present disclosure, the control circuitry determines to share the response signal when the line type is a radio line, and determines not to share the response signal when the line type is a wired line.

In a communication method according to an embodiment of the present disclosure, a base station receives controls information on sharing of a response signal for a downlink signal in inter-base-station coordinated communication, and controls transmission of the response signal to another base station based on the control information.

In a communication method according to an embodiment of the present disclosure, a communication apparatus transmits a response signal for a downlink signal in coordinated communication to a first base station performing the coordinated communication, and information on the response signal is shared with a second base station performing the coordinated communication.

The disclosure of Japanese Patent Application No. 2021-002273, filed on January 8, 2021 including the specification, drawings and abstract, is incorporated herein by reference in its entirety.

### Industrial Applicability

An exemplary embodiment of the present disclosure is useful for radio communication systems.

### Reference Signs List

100 AP
101 Controller
102 STA control-signal generator
103 AP control-signal generator
104, 203 Transmission signal generator
105, 201 Radio transceiver
106, 202 Reception signal demodulator/decoder
200 STA

## Claims

1. A base station, comprising:
reception circuitry, which, in operation, receives control information on sharing of a response signal for a downlink signal in inter-base-station coordinated communication; and
control circuitry, which, in operation, controls transmission of the response signal to another base station based on the control information.

2. The base station according to claim 1, wherein
the control circuitry indicates transmission of the response signal to the another base station to a base station that differs from the another base station among base stations involved in the inter-base-station coordinated communication when the control information received from the another base station indicates a request for the response signal.

3. The base station according to claim 1, wherein
the control circuitry determines to transmit the response signal to the another base station indicated in the control information when the received control information indicates a request for sharing of the response signal.

4. The base station according to claim 1, wherein
the control circuitry determines to transmit the response signal to the another base station when the control information received from the another base station indicates a request for sharing of the response signal of a terminal associated with the base station.

5. The base station according to claim 1, wherein
the control circuitry determines to transmit, to the another base station, the response signal from a transmission source when the received control information indicates a combination of the another base station that does not receive the response signal, among base stations involved in the inter-base-station coordinated communication, and the transmission source of the response signal.

6. The base station according to claim 5, wherein
the control information is included in a signal that triggers starting of the inter-base-station coordinated communication.

7. The base station according to claim 1, wherein
the control circuitry determines to transmit the response signal for a base station involved in the inter-base-station coordinated communication when the received control information indicates to share the response signal.

8. The base station according to claim 7, wherein
the control information is included in a signal that triggers starting of the inter-base-station coordinated communication.

9. The base station according to claim 1, wherein
the control circuitry determines whether to share the response signal with the another base station based on a line type for the another base station.

10. The base station according to claim 9, wherein
the control circuitry determines to share the response signal when the line type is a radio line, and determines not to share the response signal when the line type is a wired line.

11. A communication apparatus, comprising a transmitter that transmits a response signal for a downlink signal in coordinated communication to a first base station performing the coordinated communication, wherein
information on the response signal is shared with a second base station performing the coordinated communication.

12. A communication method, comprising:
receiving, by a base station, control information on sharing of a response signal for a downlink signal in inter-base-station coordinated communication; and
controlling, by the baes station, transmission of the response signal to another base station based on the control information.

13. A communication method, comprising:
transmitting, by a communication apparatus, a response signal for a downlink signal in coordinated communication to a first base station performing the coordinated communication, wherein
information on the response signal is shared with a second base station performing the coordinated communication.
